(19) Europäisches Patentamt
European Patent Office
Office européen des brevets

(11) **EP 4 492 880 A1**

(12) **EUROPEAN PATENT APPLICATION**
published in accordance with Art. 153(4) EPC

(43) Date of publication:
**15.01.2025 Bulletin 2025/03**

(21) Application number: **23787589.3**

(22) Date of filing: **07.04.2023**

(51) International Patent Classification (IPC):
**H04W 56/00** (2009.01)

(52) Cooperative Patent Classification (CPC):
**H04W 56/00; H04W 72/12**

(86) International application number:
**PCT/CN2023/086840**

(87) International publication number:
**WO 2023/197945 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.04.2022 CN 202210380027**

(71) Applicant: **Huawei Technologies Co., Ltd.
Shenzhen, Guangdong 518129 (CN)**

(72) Inventors:
• **YANG, Liu
Shenzhen, Guangdong 518129 (CN)**
• **LIU, Rongkuan
Shenzhen, Guangdong 518129 (CN)**
• **ZHANG, Jiayin
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND COMMUNICATION APPARATUS**

(57) This application provides a communication method and a communication apparatus. The method includes: receiving first information from a network device, where the first information is for activating a first uplink configuration; sending second information to the network device in a first time unit, where the second information is for confirming that the first information is received; and then determining an effective moment of the first uplink configuration, where a time interval between the effective moment and the first time unit is a first time interval. The first time interval is greater than a sum of a first time offset and a second time offset, the first time offset is a time offset between an uplink time unit and a downlink time unit that are of the network device and that correspond to a same time unit identifier, and the second time offset is a time offset between an uplink time unit and a downlink time unit that are of a terminal device and that correspond to a same time unit identifier, to reduce a probability of an information transmission failure and improve reliability of communication.

FIG. 8

EP 4 492 880 A1

**Description**

This application claims priority to Chinese Patent Application No. 202210380027.2, filed with the China National Intellectual Property Administration on April 12, 2022 and entitled "COMMUNICATION METHOD AND COMMUNICATION APPARATUS", which is incorporated herein by reference in its entirety.

**TECHNICAL FIELD**

This application relates to the communication field, and more specifically, to a communication method and a communication apparatus.

**BACKGROUND**

In a mobile communication system, a network device and a terminal device need to reach a consensus on a time sequence of signal (information, data, and the like) transmission, to accurately receive information. For example, before sending downlink data to the terminal device, the network device notifies the terminal device of a time interval between a downlink data channel (for example, a physical downlink shared channel (physical downlink shared channel, PDSCH)) carrying the downlink data and a control channel (for example, a physical uplink control channel (physical uplink control channel, PUCCH)) carrying feedback information of the downlink data sent by the terminal device. After receiving the downlink data, the terminal device sends the corresponding feedback information based on the time interval, so that the network device can receive the feedback information based on the time interval. In addition, effective time is further preset for an uplink configuration activated by the network device for the terminal device, so that the terminal device and the network device can agree on the activated uplink configuration.

However, currently, for signaling that is carried on the downlink data channel and that is for activating the uplink configuration, there is a problem that transmission fails because the terminal device and the network device may have inconsistent understandings of the effective time of the uplink configuration.

**SUMMARY**

Embodiments of this application provide a communication method and a communication apparatus, to reduce a probability of an information transmission failure and improve reliability of communication.

According to a first aspect, a communication method is provided. The method may be performed by a terminal device or a module (for example, a chip) disposed in (or used in) the terminal device.

The method includes: receiving first information from a network device, where the first information is for activating a first uplink configuration; sending second information to the network device in a first time unit, where the second information is for confirming that the first information is received; and determining an effective moment of the first uplink configuration, where a time interval between the effective moment and the first time unit is a first time interval. The first time interval is greater than a sum of a first time offset and a second time offset, the first time offset is a time offset between an uplink time unit and a downlink time unit that are of the network device and that correspond to a same time unit identifier, and the second time offset is a time offset between an uplink time unit and a downlink time unit that are of the terminal device and that correspond to a same time unit identifier.

Based on the foregoing solution, for the foregoing problem that the terminal device and the network device have inconsistent understandings of effective time of an activated uplink configuration, this application provides a definition of an effective moment (that is, absolute time in which the uplink configuration takes effect) of the activated uplink configuration on a side of the terminal device, so that the terminal device and the network device can have consistent understandings of the used uplink configuration, a probability of a scheduling failure is reduced, and reliability of communication is improved.

With reference to the first aspect, in some implementations of the first aspect, the first time interval is greater than or equal to a sum of a second time interval, the first time offset, and the second time offset; and the second time interval is a predefined minimum time interval for a configuration to take effect.

With reference to the first aspect, in some implementations of the first aspect, the determining an effective moment of the first uplink configuration includes: determining a second time unit based on the first time unit and the second time interval, where a time interval between the second time unit and the first time unit is the second time interval; determining a third time unit based on a first identifier of an uplink time unit of the second time unit, where the third time unit is a downlink time unit corresponding to the first identifier; and determining a fourth time unit based on the third time unit and the first time offset, where a time interval between the fourth time unit and the third time unit is the first time offset, and the effective moment is a start moment of the fourth time unit.

Based on the foregoing solution, the terminal device can determine the effective moment of the first uplink

2

configuration based on a correspondence between an identifier of an uplink time unit and an identifier of a downlink time unit, so that the terminal device and the network device have the consistent understandings of the used uplink configuration, the probability of the scheduling failure is reduced, and the reliability of the communication is improved.

With reference to the first aspect, in some implementations of the first aspect, the method further includes: receiving third information from the network device before the effective moment, where the third information is for scheduling the terminal device to send uplink information; and sending the uplink information based on a second uplink configuration, where the second uplink configuration is an uplink configuration that has taken effect before the first uplink configuration takes effect.

Based on the foregoing solution, before the effective moment of the first uplink configuration, the terminal device sends the uplink information by using the uplink configuration that has taken effect before the first uplink configuration takes effect, so that when the terminal device and the network device have the consistent understandings of the used uplink configuration, uplink scheduling can continue to be performed by using a dedicated uplink configuration of the terminal device.

With reference to the first aspect, in some implementations of the first aspect, the method further includes: receiving fourth information in a third time interval before the effective moment, where the fourth information is for scheduling the terminal device to send uplink information, and the third time interval is greater than or equal to the sum of the first time offset and the second time offset; and determining, on the basis that the fourth information is received in the third time interval, not to respond to the fourth information.

Based on the foregoing solution, the terminal device considers that the network device does not perform uplink scheduling transmission in a time period in which inconsistent understandings of the uplink configuration may occur. If the terminal device receives uplink scheduling information, it is considered that the scheduling information is inaccurate. Therefore, the scheduling information is not responded to, a probability of a case in which scheduling fails due to the inconsistent understandings is reduced, and reliability of communication is improved.

With reference to the first aspect, in some implementations of the first aspect, the receiving first information from a network device includes: receiving the first information from the network device in a fifth time unit, where a time interval between the fifth time unit and the first time unit is a fourth time interval, the fourth time interval is indicated by the network device, and a time interval between the effective moment and the fifth time unit is a sum of the fourth time interval and the first time interval.

According to a second aspect, a communication method is provided. The method may be performed by a network device or a module (for example, a chip) disposed in (or used in) the network device.

The method includes: sending first information to a terminal device, where the first information is for activating a first uplink configuration; and determining not to send scheduling information of uplink information to the terminal device in a third time interval before an effective moment of the first uplink configuration. The third time interval is greater than or equal to a sum of a first time offset and a second time offset, the first time offset is a time offset between an uplink time unit and a downlink time unit that are of a network device and that correspond to a same time unit identifier, and the second time offset is an offset between an uplink time unit and a downlink time unit that are of the terminal device and that correspond to a same time unit identifier.

With reference to the second aspect, in some implementations of the second aspect, the method further includes: receiving second information from the terminal device in a seventh time unit, where the second information is for confirming that the first information is received; and

determining, based on the seventh time unit and a second time interval, an eighth time unit that is separated from the seventh time unit by the second time interval, where a start moment of the eighth time unit is the effective moment.

With reference to the second aspect, in some implementations of the second aspect, the method further includes: determining a sixth time unit based on a second identifier of an uplink time unit corresponding to the eighth time unit, where the sixth time unit is a downlink time unit corresponding to the second identifier; and determining, based on the sixth time unit and the first time offset, a ninth time unit that is separated from the sixth time unit by the first time offset, where the ninth time unit is a downlink time unit corresponding to the effective moment.

According to a third aspect, a communication apparatus is provided. In a design, the apparatus may include modules that are in one-to-one correspondence with the method/operations/steps/actions described in the first aspect. The module may be a hardware circuit, may be software, or may be implemented by using a combination of a hardware circuit and software. In a design, the apparatus includes:

a transceiver unit, configured to receive first information from a network device, where the first information is for activating a first uplink configuration, where the transceiver unit is configured to send second information to the network device in a first time unit, where the second information is for confirming that the first information is received; and

a processing unit, configured to determine an effective moment of the first uplink configuration, where a time interval between the effective moment and the first time unit is a first time interval. The first time interval is greater than a sum of a first time offset and a second time offset, the first time offset is a time offset between an uplink time unit and a downlink time unit that are of the network device and that correspond to a same time unit identifier, and the second time offset is a time offset between an uplink time unit and a downlink time unit that are of a terminal device and that correspond to a same time unit identifier.

With reference to the third aspect, in some implementations of the third aspect, the first time interval is greater than or equal to a sum of a second time interval, the first time offset, and the second time offset; and the second time interval is a predefined minimum time interval for a configuration to take effect.

With reference to the third aspect, in some implementations of the third aspect, the processing unit is specifically configured to:

determine a second time unit based on the first time unit and the second time interval, where a time interval between the second time unit and the first time unit is the second time interval;

determine a third time unit based on a first identifier of an uplink time unit of the second time unit, where the third time unit is a downlink time unit corresponding to the first identifier; and

determine a fourth time unit based on the third time unit and the first time offset, where a time interval between the fourth time unit and the third time unit is the first time offset, and the effective moment is a start moment of the fourth time unit.

With reference to the third aspect, in some implementations of the third aspect, the transceiver unit is further configured to receive third information from the network device before the effective moment, where the third information is for scheduling the terminal device to send uplink information; and

the transceiver unit is further configured to send the uplink information based on a second uplink configuration, where the second uplink configuration is an uplink configuration that has taken effect before the first uplink configuration takes effect.

With reference to the third aspect, in some implementations of the third aspect, the transceiver unit is further configured to receive fourth information in a third time interval before the effective moment, where the fourth information is for scheduling the terminal device to send uplink information, and the third time interval is greater than or equal to a sum of the first time offset and the second time offset; and

the processing unit is further configured to determine, on the basis that the fourth information is received in the third time interval, not to respond to the fourth information.

With reference to the third aspect, in some implementations of the third aspect, the transceiver unit is further configured to receive the first information from the network device in a fifth time unit, where a time interval between the fifth time unit and the first time unit is a fourth time interval, the fourth time interval is indicated by the network device, and a time interval between the effective moment and the fifth time unit is a sum of the fourth time interval and the first time interval.

According to a fourth aspect, a communication apparatus is provided. In a design, the apparatus may include modules that are in one-to-one correspondence with the method/operations/steps/actions described in the second aspect. The module may be a hardware circuit, may be software, or may be implemented by using a combination of a hardware circuit and software. In a design, the apparatus includes: a transceiver unit, configured to send first information to a terminal device, where the first information is for activating a first uplink configuration; and

a processing unit, configured to determine not to send scheduling information of uplink information to the terminal device in a third time interval before an effective moment of the first uplink configuration. The third time interval is greater than or equal to a sum of a first time offset and a second time offset, the first time offset is a time offset between an uplink time unit and a downlink time unit that are of a network device and that correspond to a same time unit identifier, and the second time offset is an offset between an uplink time unit and a downlink time unit that are of the terminal device and that correspond to a same time unit identifier.

With reference to the fourth aspect, in some implementations of the fourth aspect, the transceiver unit is further configured to receive second information from the terminal device in a seventh time unit, where the second information is for confirming that the first information is received; and

the processing unit is further configured to determine, based on the seventh time unit and a second time interval, an eighth time unit that is separated from the seventh time unit by the second time interval, where a start moment of the eighth time unit is the effective moment.

With reference to the fourth aspect, in some implementations of the fourth aspect, the processing unit is further configured to:

determine a sixth time unit based on a second identifier of an uplink time unit corresponding to the eighth time unit, where the sixth time unit is a downlink time unit corresponding to the second identifier; and

determine, based on the sixth time unit and the first time offset, a ninth time unit that is separated from the sixth time unit by the first time offset, where the ninth time unit is a downlink time unit corresponding to the effective moment.

According to a fifth aspect, a communication apparatus is provided, including a processor. The processor may implement the method in any one of the first aspect and the possible implementations of the first aspect. Optionally, the communication apparatus further includes a memory. The processor is coupled to the memory, and may be configured to execute instructions in the memory, to implement the method in any one of the first aspect or the possible implementations of the first aspect. Optionally, the communication apparatus further includes a communication interface, and the processor is coupled to the communication interface. In this embodiment of this application, the communication interface may be a transceiver, a pin, a circuit, a bus, a module, or a communication interface of another type. This is not limited.

In an implementation, the communication apparatus is a terminal device. When the communication apparatus is the terminal device, the communication interface may be a transceiver or an input/output interface.

In another implementation, the communication apparatus is a chip configured in a terminal device. When the communication apparatus is the chip configured in the terminal device, the communication interface may be an input/output interface.

Optionally, the transceiver may be a transceiver circuit. Optionally, the input/output interface may be an input/output circuit.

According to a sixth aspect, a communication apparatus is provided, including a processor. The processor may implement the method in any one of the second aspect and the possible implementations of the second aspect. Optionally, the communication apparatus further includes a memory. The processor is coupled to the memory, and may be configured to execute instructions in the memory, to implement the method in any one of the second aspect or the possible implementations of the second aspect. Optionally, the communication apparatus further includes a communication interface, and the processor is coupled to the communication interface.

In an implementation, the communication apparatus is a network device. When the communication apparatus is the network device, the communication interface may be a transceiver or an input/output interface.

In another implementation, the communication apparatus is a chip configured in a network device. When the communication apparatus is a chip disposed in a first network device, the communication interface may be an input/output interface.

Optionally, the transceiver may be a transceiver circuit. Optionally, the input/output interface may be an input/output circuit.

According to a seventh aspect, a processor is provided, including an input circuit, an output circuit, and a processing circuit. The processing circuit is configured to receive a signal by using the input circuit, and transmit a signal by using the output circuit, to enable the processor to perform the method in any one of the first aspect and the possible implementations of the first aspect, or performs the method in any one of the second aspect and the possible implementations of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to an eighth aspect, a computer program product is provided. The computer program product includes a computer program (which may also be referred to as code or instructions). When the computer program is run, a computer is enabled to perform the method in any one of the first aspect and the possible implementations of the first aspect, or perform the method in any one of the second aspect and the possible implementations of the second aspect.

According to a ninth aspect, a computer-readable storage medium is provided. The computer-readable storage medium stores a computer program (which may also be referred to as code or instructions). When the computer program is run on a computer, the computer is enabled to perform the method in any one of the first aspect and the possible implementations of the first aspect, or perform the method in any one of the second aspect and the possible implementations of the second aspect.

According to a tenth aspect, a communication system is provided, including the foregoing at least one terminal device and at least one network device.

## BRIEF DESCRIPTION OF DRAWINGS

FIG. 1 is a diagram of a communication system to which an embodiment of this application is applicable;
FIG. 2 is a diagram of an architecture of an NTN network to which an embodiment of this application is applicable;
FIG. 2a is a diagram of another architecture of an NTN network to which an embodiment of this application is applicable;

FIG. 3 is a diagram of a time sequence relationship between DCI and a PUSCH according to this application;

FIG. 4 is a diagram of a time sequence relationship between a PDSCH and feedback information corresponding to the PDSCH according to this application;

FIG. 5 is a diagram of currently determining effective time of a MAC CE;

FIG. 6 is a diagram in which a terminal device and a network device have inconsistent understandings of an uplink configuration according to this application;

FIG. 7 is a diagram of currently determining an uplink configuration by a terminal device and a network device;

FIG. 8 is a schematic flowchart of a communication method according to an embodiment of this application;

FIG. 9 to FIG. 11 are diagrams of determining an effective moment according to an embodiment of this application;

FIG. 12 is another schematic flowchart of a communication method according to an embodiment of this application;

FIG. 13 is a diagram of a third time interval according to an embodiment of this application;

FIG. 14 is a schematic block diagram of an example of a communication apparatus according to an embodiment of this application;

FIG. 15 is a diagram of a structure of an example of a terminal device according to an embodiment of this application; and

FIG. 16 is a diagram of a structure of an example of a network device according to an embodiment of this application.

## DESCRIPTION OF EMBODIMENTS

In this application, "at least one (item)" may be also described as "one (item) or more (items)", and "a plurality of (items)" may be two (items), three (items), four (items), or more (items). This is not limited. "/" may represent an "or" relationship between associated objects. For example, A/B may represent A or B. "And/or" may indicate that there are three relationships between associated objects. For example, A and/or B may represent the following three cases: Only A exists, both A and B exist, and only B exists, where A and B may be singular or plural. For ease of describing the technical solutions of this application, a word such as "first", "second", "A", or "B" may be used to distinguish between technical features with a same or similar function. The word such as "first", "second", "A", or "B" does not limit a quantity and an execution sequence. In addition, the word such as "first", "second", "A", or "B" does not limit a definite difference. A word such as "example" or "for example" is used to represent an example, an evidence, or a description. Any design solution described as "example" or "for example" should not be explained as being more preferred or having more advantages than another design solution. The word such as "an example" or "for example" are used to present a related concept in a specific manner for ease of understanding.

The technical solutions in embodiments of this application may be applied to various communication systems, for example, a long term evolution (long term evolution, LTE) system, a 5G system, a new radio (new radio, NR), a non-terrestrial network (non-terrestrial network, NTN), and a future communication system such as a 6th generation mobile communication system. This is not limited in this application.

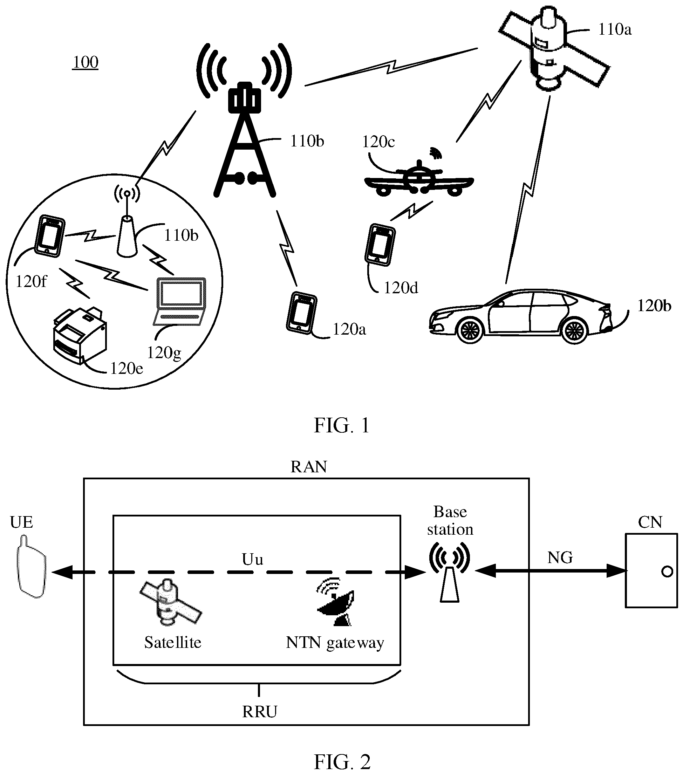

FIG. 1 is a diagram of an architecture of a communication system 100 to which an embodiment of this application is applicable. As shown in FIG. 1, the communication system 100 may include at least one access network device (for example, 110a, 110b, and 110c in FIG. 1), and may further include at least one terminal (for example, 120a to 120j in FIG. 1). Access network devices may be connected to each other in a wired or wireless manner. FIG. 1 is merely a diagram. The communication system may further include another network device, for example, may further include a wireless relay device and a wireless backhaul device.

In an NTN network, a satellite may implement transparent payload (transparent payload) transmission or regenerative payload (regenerative payload) transmission.

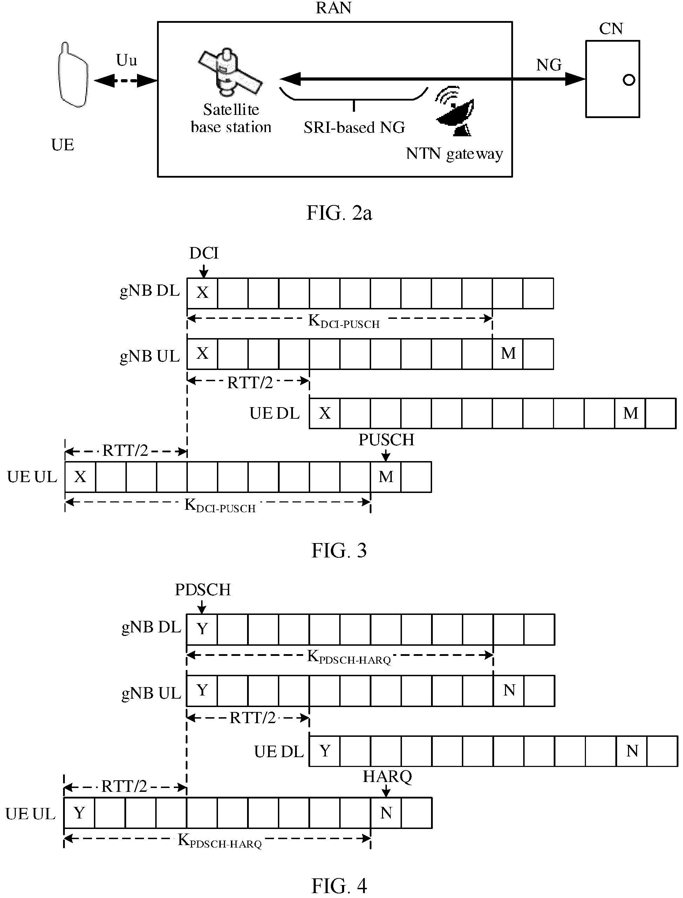

FIG. 2 is a diagram of an architecture of an NTN network to which an embodiment of this application is applicable. As shown in FIG. 2, user equipment (user equipment, UE) communicates with a ground base station via the ground base station through a universal terrestrial radio access network-user (universal terrestrial radio access network-user, Uu) interface. A satellite may implement transparent payload transmission between a user and the ground base station. The satellite and an NTN gateway may be considered as a remote radio unit (remote radio unit) of the ground base station, and implement transparent forwarding of a signal. In other words, the satellite supports only functions such as radio frequency filtering and frequency conversion and amplification, where a signal waveform is unchanged. Forwarding of the satellite is transparent to a terminal device. The ground base station and a core network (core network, CN) may perform communication through a next generation network (next generation, NG) interface, and exchange, through the NG interface, non-access stratum (non-access stratum, NAS) signaling of the core network and service data of the UE.

FIG. 2a is a diagram of another architecture of an NTN network to which an embodiment of this application is applicable. As shown in FIG. 2a, a satellite has some or all functions of an access network device, and may be referred to as a satellite base station. The satellite can provide a radio access service, and schedule a radio resource for a terminal device that accesses a network via the satellite base station. The satellite base station communicates with UE through a Uu interface. The satellite base station and a CN may perform communication through an NG interface, and the satellite base station and the core network may exchange, through the NG interface, NAS signaling and service data of the UE. A satellite radio interface (satellite radio interface, SRI) interface is a feeder link between an NTN gateway and the satellite. In FIG. 2a, the SRI interface may be used as a part of the NG interface to implement communication and interaction between the satellite and the core network.

A network device provided in embodiments of this application may be an access network device, for example, a base station (base station), a NodeB (NodeB), an evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, or an access node in a wireless fidelity (wireless fidelity, Wi-Fi) system. Alternatively, the network device may be a module or a unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The network device may be a satellite (for example, 110a in FIG. 1 or the satellite base station in FIG. 2), or may be a macro base station (for example, 110b in FIG. 1). Alternatively, the access network device may be a micro base station or an indoor base station (for example, 110c in FIG. 1), or may be a relay node or a donor node. A specific technology and a specific device form that are used by the access network device are not limited in this application.

In embodiments of this application, some or all functions of the network device may be on a non-terrestrial network (non-terrestrial network, NTN) platform (where the NTN platform includes but is not limited to a satellite, an unmanned aircraft system (unmanned aircraft system, UAS), a high altitude communication platform (high altitude platform station, HAPS), and the like), or some or all functions of the network device are on the ground, and the NTN platform is responsible for forwarding a signal between the UE and the access network device.

A terminal device provided in embodiments of this application may also be referred to as a terminal, and includes but is not limited to user equipment (user equipment, UE), a mobile station, a mobile terminal, or the like. The terminal device may be widely used in various scenarios for communication. For example, the scenario includes but is not limited to at least one of the following scenarios: enhanced mobile broadband (enhanced mobile broadband, eMBB), ultra-reliable low latency communication (ultra-reliable low-latency communication, URLLC), massive machine-type communication (massive machine-type communication, mMTC), device-to-device (device-to-device, D2D), vehicle to everything (vehicle to everything, V2X), machine-type communication (machine-type communication, MTC), an internet of things (internet of things, IoT), virtual reality, augmented reality, industrial control, self-driving, telemedicine, a smart grid, smart furniture, smart office, a smart wearable, smart transportation, a smart city, or the like. The terminal device may be a mobile phone (for example, mobile phones 120a, 120d, and 120f in FIG. 1), a tablet computer, a computer (for example, a computer 120g in FIG. 1) having a wireless transceiver function, a wearable device, a vehicle (for example, 120b in FIG. 1), an uncrewed aerial vehicle, a helicopter, an airplane (for example, 120c in FIG. 1), a ship, a robot, a mechanical arm, a smart home device (for example, a printer 120e in FIG. 1), or the like. A specific technology and a specific device form that are used by the terminal device are not limited in this application.

The base station and/or the terminal device may be fixed or movable. The base station and/or the terminal device may be deployed on the land, including an indoor or outdoor scenario, and a handheld or vehicle-mounted scenario; or may be deployed on the water; or may be deployed on an airplane, a balloon, and an artificial satellite in the air. An environment/a scenario in which the base station and the terminal device are located is not limited in this application. The base station and the terminal device may be deployed in a same environment/scenario or different environments/scenarios. For example, the base station and the terminal device are both deployed on the land. Alternatively, the base station is deployed on the land, and the terminal device is deployed on the water. Examples are not described one by one.

The following describes related technologies and terms in embodiments of this application.

1. Time sequence relationship between downlink control information (downlink control information, DCI) and a physical uplink shared channel (physical uplink shared channel, PUSCH) that is scheduled by the DCI

For example, as shown in FIG. 3, a gNB sends DCI to UE in a downlink (downlink, DL) slot X, where the DCI is for scheduling the UE to send a PUSCH, and the DCI may be referred to as uplink scheduling DCI. The gNB further indicates, to the UE, that a time interval between the DCI and the PUSCH is $K_{DCI-PUSCH}$. The UE receives the DCI in a DL slot X, and a signal transmission latency between a UE DL and a gNB DL is half of signal round-trip time (round-trip time, RTT), that is, RTT/2. In other words, duration of an interval between a UE DL slot and a gNB DL slot that have a same slot identifier is RTT/2. For example, duration of an interval between the UE DL slot X and the gNB DL slot X that have an identifier of X is RTT/2. The UE determines that a PUSCH scheduled by the DCI is sent in a UL slot M separated from a UL slot X by a time interval of $K_{DCI-PUSCH}$, where the time interval between the UL slot M and the UL slot X is $K_{DCI-PUSCH}$. However, a transmission latency in which a signal sent in an UE uplink (uplink, UL) is transmitted to a gNB UL is RTT/2. Therefore, the gNB configures a timing advance (timing advance, TA) value of the UE UL for the UE in an initial access phase, and the UE advances a UL slot based on the TA value, so that the gNB can receive, in a gNB UL slot M, a PUSCH sent by the UE in the UE UL slot M after timing advancing. As shown in FIG. 3, duration of an interval between the UE UL slot and a gNB UL slot that have a same slot identifier is RTT/2. For example, duration of an interval between a UE UL slot X and a gNB UL slot X that have an identifier of X is RTT/2, and duration of an interval between the UE UL slot M and the gNB UL slot M that have an identifier of M is RTT/2.

In this application, due to impact of the signal transmission latency and a signal processing latency of a device, absolute time of time units (where for example, the time unit may be a symbol, a mini-slot, a slot, a subframe, or a frame) having a same identifier in an uplink and a downlink of a same device may be different. As shown in FIG. 3, absolute time of the UE UL slot X and the UE DL slot X is different. In addition, absolute time of time units that have a same identifier and that are in a same transmission direction (for example, a DL or a UL) on different devices may be different. As shown in FIG. 3, absolute time of the gNB DL slot X and the UE DL slot X is different.

The time interval between the uplink scheduling DCI and the PUSCH is $K_{DCI-PUSCH}$, where for duration of $K_{DCI-PUSCH}$, an information processing latency (for example, time of processing such as demodulation and decoding of the DCI and time of processing such as encoding and modulation of the PUSCH) of the UE and transmission latencies of the DCI and the PUSCH are mainly considered. $K_{DCI-PUSCH}$ may be indicated by the gNB to a terminal device by using an indication field in the uplink scheduling DCI. Alternatively, in a mobile communication system, because a high transmission latency is caused by a large distance between a base station and a terminal device in an NTN network, the gNB may configure a time interval $K_{offset}$ for the terminal device by using a media access control (media access control, MAC) control element (control element, CE) after an initial access phase, where $K_{offset}$ is applicable to uplink scheduling and downlink scheduling in a period of time, and the gNB indicates one time interval $K_2$ in the uplink scheduling DCI. After receiving the uplink scheduling DCI, the terminal device can determine a time interval $K_{DCI-PUSCH} = K_{offset} + K_2$ between the DCI and the PUSCH.

2. Time sequence relationship between a PDSCH and feedback information of the PDSCH

For example, as shown in FIG. 4, a gNB sends downlink data to UE on a PDSCH in a DL slot Y Correspondingly, the UE receives, in a UE DL slot Y, the downlink data carried on the PDSCH, where there is a transmission latency of RTT/2 between the UE DL slot and the gNB DL slot. The gNB further indicates, to the UE, that a time interval between the PDSCH and feedback information of the PDSCH is $K_{PDSCH-HARQ}$. For example, the feedback information may be acknowledgment (acknowledgment, ACK) feedback information (denoted as a HARQ-ACK) or non-acknowledgment (non-acknowledgment, NACK) feedback information (denoted as a HARQ-NACK) in a hybrid automatic repeat request (hybrid automatic repeat request, HARQ). The UE sends HARQ feedback information in a slot N separated from a slot Y in UE UL slots by a time interval of $K_{PDSCH-HARQ}$, so that the gNB receives the HARQ feedback information from the UE in a gNB UL slot N.

Similar to $K_{DCI-PUSCH}$, for duration of $K_{PDSCH-HARQ}$, an information processing latency (for example, time of processing such as demodulation and decoding of the PDSCH and time of processing such as encoding and modulation of the HARQ) of the UE and transmission latencies of the PDSCH and the HARQ are mainly considered. $K_{PDSCH-HARQ}$ may be indicated by the gNB to a terminal device by using an indication field in downlink scheduling DCI for scheduling the PDSCH. Alternatively, when a transmission latency is high, $K_{PDSCH-HARQ}$ includes $K_{offset}$ configured by using a MAC CE and $K_1$ indicated in the downlink scheduling DCI, that is, $K_{PDSCH-HARQ} = K_{offset} + K_1$.

3. MAC CE

The MAC CE is control information of a MAC layer, and the MAC CE may include a MAC CE for carrying information related to scheduling and a MAC CE for carrying information related to random access. In addition, the MAC CE is further for notifying a terminal device of activation or deactivation of configuration information. For example, the MAC CE may include but is not limited to the following MAC CEs.

(1) MAC CE configured to activate the foregoing terminal device-specific $K_{offset}$
(2) MAC CE for activating or deactivating a channel state related resource
For example, a MAC CE for activating or deactivating a semi-persistent (semi-persistent) channel state information reference signal (CSI-reference signal, CSI-RS) resource set, a MAC CE for activating or deactivating a semi-persistent (semi-persistent) CSI-interference measurement (interference measurement, IM) resource set, a MAC CE for activating or deactivating a transmission configuration indicator (transmission configuration indicator, TCI) state of a UE-specific (UE-specific) PDSCH, a MAC CE for activating or deactivating an SP CSI report carried on a physical uplink control channel (physical uplink control channel, PUCCH), and a MAC CE for activating or deactivating an SP sounding reference signal (sounding reference signal, SRS) are included.
(3) MAC CE related to discontinuous reception (discontinuous reception, DRX)

A DRX command MAC CE and a long DRX command MAC CE are for activating or deactivating a discontinuous reception state of UE.

(4) MAC CE for activating a PUCCH spatial relationship (that is, a beam configuration)

(5) MAC CE for activating or deactivating packet data convergence protocol (packet data convergence protocol, PDCP) repetition

4. Effective time of a MAC CE

The MAC CE is carried on a PDSCH as downlink data. For the foregoing MAC CE for notifying a terminal device of activation or deactivation of configuration information, the effective time of the MAC CE is defined in consideration of factors such as a transmission latency, a processing latency of the terminal device, preparation time for a configuration to take effect, and whether the terminal device successfully receives the MAC CE.

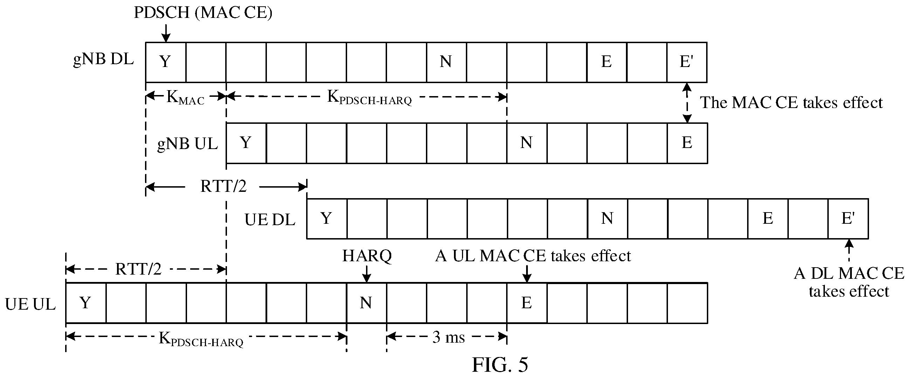

An example in which the MAC CE activates $K_{offset}$ is used. As shown in FIG. 5, after successfully receiving, in a slot Y, the PDSCH carrying the MAC CE, the terminal device sends, based on a time sequence relationship between the PDSCH and a HARQ, HARQ feedback information in a slot separated from the slot Y by $K_{PDSCH-HARQ}$. If the terminal device successfully receives the MAC CE, for an uplink MAC CE, that is, a MAC CE for activating an uplink configuration, the terminal device and a network device consider that the uplink configuration activated by the MAC CE takes effect in an uplink slot E, and $E=N+3N_{slot}^{subframe,\mu}+1$ takes effect, where $N_{slot}^{subframe,\mu}$ represents a quantity of slots corresponding to each subframe when a subcarrier spacing (subcarrier spacing, SCS)$=2^{\mu}\cdot 15$ kHz, and $\mu=0$, 1, 2, 3, or 4. For different SCSs, duration of $3N_{slot}^{subframe,\mu}$ is 3 ms. For a downlink MAC CE, that is, a MAC CE for activating a downlink configuration, the terminal device and the network device consider that the downlink configuration activated by the MAC CE takes effect in a downlink slot E', where $E'=N+3N_{slot}^{subframe,\mu}+2^{\mu}\cdot K_{mac}+1$, and $K_{mac}$ is an offset between an uplink slot and a downlink slot of a gNB, that is, an offset between a downlink slot and an uplink slot that correspond to a same slot identifier when the SCS is 15 kHz, that is, $\mu=0$. For example, an offset between a downlink slot Y and an uplink slot Y that correspond to a slot identifier Y is $K_{mac}$.

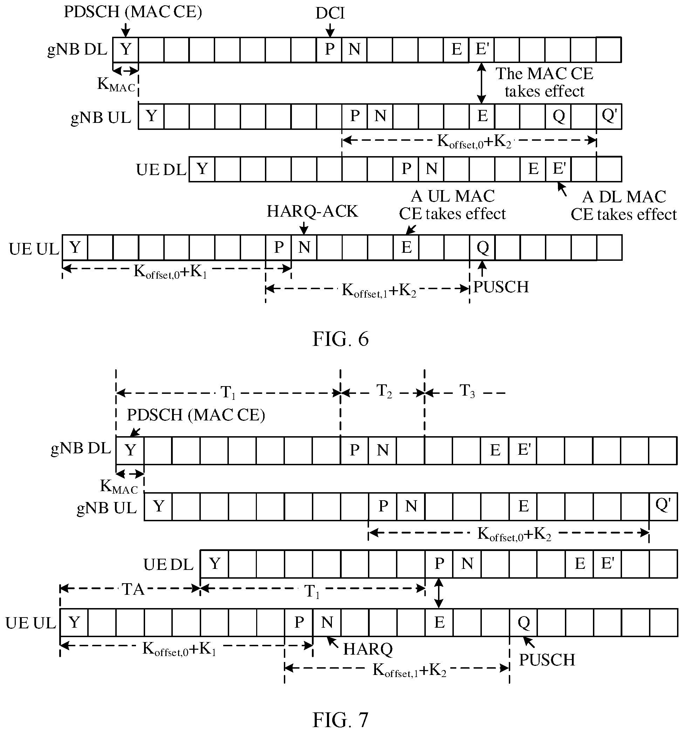

However, the foregoing definition of effective time of the uplink configuration activated by the MAC CE may cause a problem that transmission fails due to inconsistent understandings of the terminal device and the network device. As shown in FIG. 6, an example in which $\mu=0$, a MAC CE activates $K_{offset,1}$, and $K_{mac}=1$ is used. A gNB sends, on a PDSCH in a DL slot Y, the MAC CE for activating $K_{offset,1}$ to UE. Correspondingly, the UE receives the MAC CE on a PDSCH in a UE DL slot Y, and the UE determines that $K_{offset,1}$ is to be activated. A terminal device determines, based on a time sequence relationship between the PDSCH and HARQ feedback information and based on currently effective $K_{offset,0}$ and $K_1$, to send a HARQ-ACK to a network device in a UL slot N. Therefore, the UE determines, based on the UL slot N in which the HARQ-ACK is sent, that the MAC CE starts to take effect in a UL slot E, where $E=N+3N_{slot}^{subframe,0}+1=N+4$. Correspondingly, the gNB receives the HARQ-ACK from the UE in a UL slot N of the gNB, and the gNB determines, based on the UL slot N, that the MAC CE starts to take effect in a UL slot E. In addition, for a DL slot, the gNB and the UE consider that the MAC CE takes effect in a DL slot E', where $E'=N+3N_{slot}^{subframe,0}+2^0\cdot K_{mac}+1=N+5$. If the gNB sends DCI to the UE in a DL slot P, the DCI is for scheduling the UE to send uplink data. Because the gNB does not receive, from the UE, feedback information of the MAC CE for activating $K_{offset,1}$, $K_{offset,1}$ does not take effect. The gNB determines, based on currently effective $K_{offset,0}$ and $K_2$ that is indicated by the DCI, to receive, on a PUSCH in a slot Q', the uplink data sent by the UE in response to the uplink scheduling DCI, where $Q'=P+K_{offset,0}+K_2$. After the UE receives the uplink scheduling DCI from the gNB in the DL slot P, because $K_{offset,1}$ has taken effect in an uplink slot of the UE, the UE determines, based on $K_{offset,1}$ and $K_2$ that is indicated by the DCI, to send the uplink data on a PUSCH in a slot Q, where $Q=P+K_{offset,1}+K_2$. In this case, due to the inconsistent understandings of the effective time of the MAC CE, the UE and the gNB do not agree on a slot for sending the uplink data, causing a case of a scheduling failure.

For the problem shown in FIG. 6, there is currently a solution. As shown in FIG. 7, a gNB can learn of an offset between a DL slot and a UL slot that are of the gNB and UE and that correspond to a same slot identifier, that is, $K_{mac}$ and a TA, and can learn of signal round-trip time RTT between the gNB and the UE. Therefore, the gNB can determine that, if the UE correctly receives a MAC CE, the MAC CE will take effect in a UL slot E of the UE, and the UL slot E corresponds to a DL slot P of the UE. However, the gNB considers that the MAC CE does not take effect in the DL slot P. Therefore, a case of inconsistent understandings will occur in scheduling information sent by the gNB to the UE from the DL slot P. In a $T_1$ time period before the DL slot P, both the gNB and the UE consider that the MAC CE does not take effect, and understandings can be consistent. After the gNB receives HARQ feedback information from the UE in a UL slot n, the gNB may indicate, based on the HARQ feedback information, whether the UE successfully receives the MAC CE, and determine whether the MAC CE on a side of the UE takes effect, and whether the UE uses $K_{offset,0}$ or $K_{offset,1}$. Therefore, in a T2 time period between the T1 time period and a T3 time period, it is learned that the UE and the gNB cannot have consistent understandings of whether the MAC CE takes effect. In this solution, it is proposed that in the T2 time period, the gNB uses only DCI in a fallback (fallback) format (format) to schedule uplink information, and transmission related to the fallback DCI format uses cell-specific (cell-specific) $K_{offset}$. After receiving the DCI in the fallback DCI format, the UE determines, by using cell-specific $K_{offset}$, a transmission slot of the uplink information scheduled by using the DCI. In this way, the UE and the gNB have consistent understandings of $K_{offset}$ in the T2 time period.

The solution shown in FIG. 7 still has a problem of inconsistent understandings. For example, although the gNB has received a HARQ-ACK, the MAC CE on a side of the gNB still does not take effect and takes effect 3 ms after a slot N. However, the MAC CE on a side of the UE has taken effect. The two parties still have a problem of inconsistent understandings of $K_{offset}$. In addition, in this solution, the gNB needs to separately use $K_{offset,0}$, cell-specific $K_{offset}$, and $K_{offset,1}$ at T1, T2, and T3, so that the gNB uses three different values of $K_{offset}$ in three consecutive phases, and scheduling complexity of the gNB and the UE is increased. In addition, cell-specific $K_{offset}$ is applicable to a random access phase, and is designed for cell edge UE. For non-cell edge UE, cell-specific $K_{offset}$ is generally greater than UE-specific (UE-specific) $K_{offset}$, and an unnecessary transmission latency may be caused by using cell-specific $K_{offset}$ in a data transmission phase. In addition, as described above, the MAC CE may be for activating a plurality of uplink configurations. This solution can resolve only a problem of inconsistent understandings of effective time of $K_{offset}$. For a MAC CE for activating another uplink configuration (such as a DRX configuration or a PUCCH spatial relationship), there is still a problem of inconsistent understandings of effective time for a period of time.

For the foregoing problem that the terminal device and the network device have inconsistent understandings of effective time of an activated uplink configuration, this application provides a definition of an effective moment of the activated uplink configuration on a side of the terminal device, so that the terminal device and the network device can have consistent understandings of the effective moment of the uplink configuration, a probability of a scheduling failure is reduced, and reliability of communication is improved.

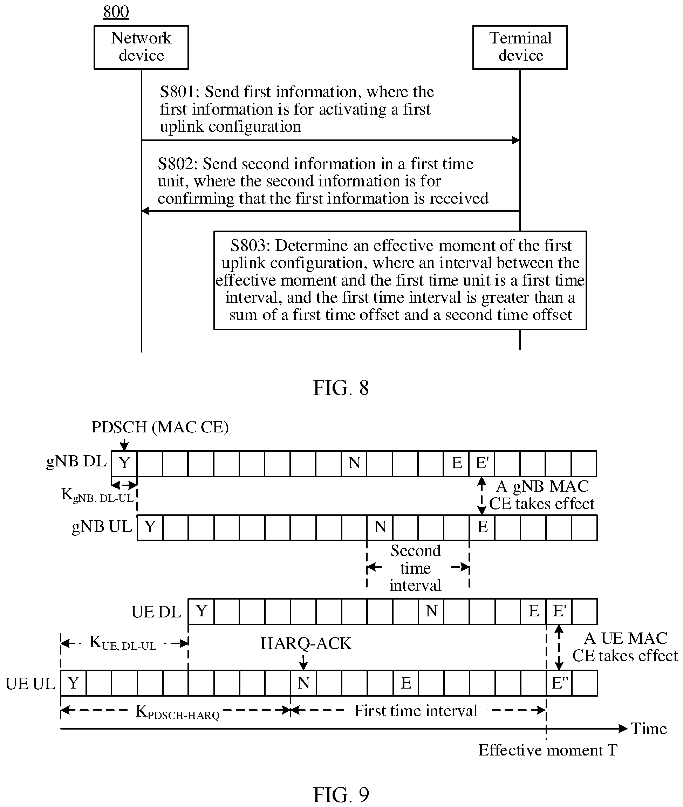

The following describes the technical solutions provided in this application with reference to the accompanying drawings. FIG. 8 is a schematic flowchart of a communication method 800 according to an embodiment of this application. FIG. 8 is shown by using a network device and a terminal device. The network device and/or the terminal device may alternatively be replaced with chips/a chip, modules/a module, or the like configured to perform the method. This application is not limited thereto.

S801: The network device sends first information to the terminal device, where the first information is for activating a first uplink configuration.

Correspondingly, the terminal device receives the first information from the network device, and determines, based on the first information, that the first uplink configuration is activated.

For example, as shown in FIG. 9, a gNB (which is an example of the network device) sends a MAC CE (which is an example of the first information) to the terminal device on a PDSCH in a DL slot Y, where the MAC CE is for activating the first uplink configuration. Correspondingly, UE (which is an example of the terminal device) receives the MAC CE from the gNB on a PDSCH in a DL slot Y, and determines, based on the MAC CE, that the first uplink configuration is activated. It should be noted that, to better understand the communication method provided in this application, in this embodiment of this application, this solution is mainly described by using an example in which the network device is the gNB, the terminal device is the UE, and the first information is the MAC CE. It should be understood that this application is not limited thereto. The network device and the terminal device may respectively be, but are not limited to, the network device and the terminal device that are described above.

Optionally, the first uplink configuration may include but is not limited to one or more of the following: a time interval $K_{offset}$, a DRX configuration, or an uplink beam configuration for determining a time sequence relationship between downlink information and uplink information.

S802: The terminal device sends second information to the network device in a first time unit, where the second information is for confirming that the first information is received.

After successfully receiving the first information, the terminal device sends, to the network device, the second information for confirming that the first information is received. For example, the second information may be a HARQ-ACK of the first information, so that the network device determines that the terminal device has received the first information, and learns that the first uplink configuration is activated.

Transmission resources of the terminal device and the network device are divided into a plurality of consecutive time units with equal duration in terms of time, and the time units are distinguished by using identifiers of the time units. By way of example but not limitation, the time unit in this application may be a time domain symbol (where for example, the time domain symbol may be orthogonal frequency division multiplexing (orthogonal frequency division multiplexing, OFDM)), a mini-slot (mini-slot), a slot (slot), a subframe (subframe), or a frame (frame). In examples of this application, an example in which the time unit is the slot is used for description. It should be understood that this application is not limited thereto.

For example, as shown in FIG. 9, after receiving the MAC CE on the PDSCH in the DL slot Y, the UE determines, based on $K_{PDSCH-HARQ}$ indicated by the gNB, to send the HARQ-ACK in a UL slot N separated from the slot Y by $K_{PDSCH-HARQ}$. In this case, the UE determines that the HARQ-ACK is sent to the gNB in the UL slot N (where the UL slot N is an example of the first time unit). Correspondingly, the gNB receives the HARQ-ACK from the UE in the UL slot N of the gNB, and determines that the UE has received the MAC CE.

S803: The terminal device determines an effective moment of the first uplink configuration, where a time interval between the effective moment and the first time unit is a first time interval, and the first time interval is greater than a sum of a first time offset and a second time offset.

The terminal device starts to apply the first uplink configuration at the effective moment, and still applies, before the effective moment, a second uplink configuration that has taken effect before the first uplink configuration takes effect. The first time offset is a time offset between an uplink time unit and a downlink time unit that are of the network device and that correspond to a same time unit identifier. For example, the first time offset is $K_{gNB,DL-UL}$ shown in FIG. 9. The second time offset is an offset between an uplink time unit and a downlink time unit that are of the terminal device and that correspond to a same time unit identifier. For example, the second time offset is $K_{UE,DL-UL}$ shown in FIG. 9. In other words, the first time interval is greater than $K_{gNB,DL-UL}+K_{UE,DL-UL}$.

The terminal device may determine, based on the first time unit in which the second information is sent and the first time interval, absolute time that is after the first time unit and that is separated from the first time unit by the first time interval. The terminal device considers that the absolute time is the effective moment of the first uplink configuration. The effective moment is applicable to both a DL slot and a UL slot. For example, as shown in FIG. 9, the terminal device determines that absolute time T separated from the UL slot N (which is an example of the first time unit) by the first time interval is the effective moment of the first uplink configuration. The absolute time T is applicable to both a DL slot of the UE and a UL slot of the UE. If the UE receives one piece of uplink scheduling information in a DL slot before the effective moment T, the UE sends, by using the second uplink configuration, uplink information in response to the uplink scheduling information. If the UE receives one piece of uplink scheduling information in a DL slot after the effective moment T, the UE sends, by using the first uplink configuration that has taken effect, uplink information in response to the uplink scheduling information. If the UE sends the uplink information to the network device in a UL slot before the effective moment T, for example, sends channel state information (channel state information, CSI), the UE sends the CSI by using the second uplink configuration. The UE sends the CSI to the network device in a UL slot after the effective moment by using the first uplink configuration that has taken effect.

The terminal device may determine the first time interval based on, but not limited to, the following two implementations.

In an implementation, the network device may send indication information to the terminal device, where the indication information indicates the first time interval, and the first time interval is greater than the sum of the first time offset and the second time offset. The terminal device determines the first time interval based on the indication information.

For example, the indication information indicating the first time interval may be an information element (information element, IE) in a radio resource control (radio resource control, RRC) message. For example, the first time interval may be indicated by using an IE in a system information block (system information block, SIB). For example, the IE may be referred to as a MAC CE effective interval IE. It should be understood that a specific name of the IE is not limited in this application. The indication information of the first time interval may alternatively be carried in a terminal device-specific (UE-specific) RRC message. Alternatively, the indication information of the first time interval may be an indication field in a MAC CE. For example, the indication information may be an indication field in the MAC CE (that is, the first information) for activating the first uplink configuration. However, this application is not limited thereto. The indication information may alternatively be an indication field in another MAC CE. Alternatively, the indication information may be an indication field in DCI. For example, an indication field is added to existing DCI to indicate the first time interval, or an indication field in the existing DCI is reused. This is not limited in this application.

The terminal device determines, based on the first time unit in which the terminal device sends the second information and the first time interval indicated by the indication information, that a moment separated from the first time unit by the first time interval is the effective moment of the first uplink configuration. For example, as shown in FIG. 9, a time unit is a slot, and the UE determines to send the HARQ-ACK in the UL slot N. In this case, the moment separated from the UL slot N by the first time interval is the effective moment of the first uplink configuration.

Optionally, the first time interval is a quantity of time units, for example, a quantity of slots.

As shown in FIG. 9, the UE determines, based on the UL slot N and the first time interval, that a start moment of a UL slot E" separated from the UL slot N by the first time interval is the effective moment of the first uplink configuration. For example, calculation may be performed with reference to the following formula:

$$E''_{UE,UL} = N_{UE,UL} + K_{int1},$$

where

$N_{UE,UL}$ represents a slot identifier of the UL slot N of the UE, $E''_{UE,UL}$ represents a slot identifier of the UL slot E" of the UE, and $K_{int1}$ represents the quantity of slots included in the first time interval.

Correspondingly, after receiving a HARQ-ACK feedback from the terminal device in the UL slot N, the network device may determine that a moment separated from the UL slot N by a second time interval is the effective moment of the uplink configuration. The second time interval is obtained by subtracting the first time offset and the second time offset from the first time interval.

Optionally, the second time interval is a quantity of time units.

As shown in FIG. 9, the gNB determines, based on the UL slot N and the second time interval, that a start moment of a UL slot E separated from the UL slot N by the second time interval is the effective moment of the first uplink configuration. For example, calculation may be performed with reference to the following formula:

$$E_{gNB,UL} = N_{gNB,UL} + K_{int2} ,$$

where

$N_{gNB,uL}$ represents a slot identifier of the UL slot N of the gNB, $E_{gNB,UL}$ represents a slot identifier of the UL slot E of the gNB, and $K_{int2}$ represents the quantity of slots included in the second time interval.

In another implementation, the first time interval is greater than or equal to a sum of the second time interval, the first time offset, and the second time offset.

The second time interval may be a predefined minimum time interval for a configuration to take effect. The minimum time interval (that is, the second time interval) for the configuration to take effect may be specified, so that the network device and the terminal device reach a consensus on the minimum time interval for the configuration to take effect. However, this application is not limited thereto. The second time interval may alternatively be configured by the network device for the terminal device.

Example 1: The network device may preconfigure the first time offset and the second time offset for the terminal device. The terminal device may determine the first time interval based on the predefined second time interval, and the first time offset and the second time offset that are configured by the network device. The first time interval is the sum of the second time interval, the first time offset, and the second time offset.

The second time offset may be configured by the network device for the terminal device by using a random access message, or the second time offset may be calculated by the terminal device based on a location of the terminal device and ephemeris information of a serving satellite. For example, the second time offset may be referred to as an uplink timing advance TA of the UE. The first time offset may be configured by the network device for the terminal device by using configuration information (for example, a MAC CE or an RRC message). However, this application is not limited thereto. The first time offset and the second time offset may alternatively be configured for the terminal device by using different information elements or different indication fields in same configuration information.

Example 2: The network device may preconfigure, for the terminal device, a time interval A for determining an effective moment of a configuration, where the time interval A is greater than or equal to the sum of the first time offset and the second time offset. The terminal device determines the first time interval based on the predefined second time interval and the time interval A configured by the network device. The first time interval is a sum of the time interval A and the second time interval.

In this implementation, after the terminal device determines the first time interval (for example, the terminal device determines the first time interval based on, but not limited to, the example 1 or the example 2), the terminal device may determine the effective moment of the first uplink configuration based on the first time interval. For example, as shown in FIG. 9, the terminal device can determine that the effective moment of the first uplink configuration is the moment separated from the UL slot N in which the terminal device sends the HARQ-ACK by the first time interval. Correspondingly, after receiving the HARQ-ACK in the UL slot N of the gNB, the gNB determines, based on the second time interval, that the effective moment of the first uplink configuration on a side of the gNB is the moment separated from the UL slot N by the second time interval.

The foregoing describes manners in which the terminal device determines the effective moment (that is, the absolute time) of the first uplink configuration based on the first time unit and the network device determines the effective moment of the first uplink configuration based on the time unit in which the second information is received. However, this application is not limited thereto. The terminal device and the network device may alternatively determine the effective moment of the first uplink configuration based on an identifier of the uplink time unit and an identifier of the downlink time unit in the following optional manner.

Optionally, that the terminal device determines the effective moment of the first uplink configuration includes: The terminal device determines a second time unit based on the first time unit and the second time interval, where a time interval between the second time unit and the first time unit is the second time interval. Then, the terminal device determines, based on a first identifier of an uplink time unit of the second time unit, a downlink time unit (denoted as a third time unit) corresponding to the first identifier. In addition, the terminal device determines, based on the downlink time unit corresponding to the first identifier and the first time offset, that the effective moment is a start moment of a time unit (denoted as a fourth time unit) separated from the third time unit by a time interval of the first time offset.

For example, as shown in FIG. 9, a time unit is a slot, and the second time interval is four slots. The UE may determine, based on the UL slot N in which the HARQ-ACK is sent and the second time interval, the UL slot E (where the DL slot E' is an example of the second time unit) separated from the UL slot N by four slots. Then, the UE determines, based on a slot identifier E of the UL slot E, the DL slot E (where the DL slot E' is an example of the third time unit), that is, a downlink slot identified by the slot identifier E. After determining the DL slot E, the UE determines, based on the DL slot E and the first time offset, that the effective moment of the first uplink configuration is a start moment of a DL slot E' (where the DL slot E' is an example of the fourth time unit) separated from the DL slot E by the first time offset.

Alternatively, the UE may determine the DL slot N based on a slot identifier N of the UL slot N in which the HARQ-ACK is sent, and then determine the DL slot E separated from the DL slot N by the second time interval. Then, the UE determines, based on the DL slot E and the first time offset, the DL slot E' separated from the DL slot E by one slot. In this way, the UE determines that the start moment of the DL slot E' is the effective moment of the first uplink configuration.

Correspondingly, the network device determines, based on a time unit (denoted as a seventh time unit) in which the second information is received from the terminal device and the second time interval, that the effective moment of the first uplink configuration is an effective moment of a time unit (denoted as an eighth time unit) separated from the time unit in which the second information is received by the second time interval.

In addition, the network device may determine, based on a second identifier of an uplink time unit corresponding to the time unit separated from the time unit in which the second information is received by the second time interval, a downlink time unit (denoted as a sixth time unit) corresponding to the second identifier. Then, the network device determines, based on the downlink time unit corresponding to the second identifier and the first time offset, that a downlink time unit corresponding to the effective moment of the first uplink configuration is a time unit separated from the downlink time unit corresponding to the second identifier by the first time offset.

For example, as shown in FIG. 9, a time unit is a slot, and the second time interval is four slots. The gNB may determine, based on the UL slot N (where the UL slot N is an example of the seventh time unit) in which the HARQ-ACK is received and the second time interval, the UL slot E (where the UL slot E is an example of the eighth time unit) separated from the UL slot N by four slots, where a start moment of the UL slot E is the effective moment of the first uplink configuration. In addition, the gNB may determine, based on the uplink slot identifier E of the UL slot E, the DL slot E (where the UL slot E is an example of the sixth time unit), that is, the downlink slot identified by the slot identifier E. The network device then determines the DL slot E, determines that the first time offset is one slot, determines the DL slot E' (where the DL slot E' is an example of the sixth time unit) separated from the DL slot E by one slot, and determines that the DL slot E' is a DL slot corresponding to the effective moment of the first uplink configuration.

Alternatively, the gNB may determine, based on the slot identifier N of the UL slot N in which the HARQ-ACK is received, the DL slot N, that is, the downlink slot identified by the slot identifier N. Then, the network device determines the DL slot E after the second time interval of the DL slot N, and determines, on the basis that the first time offset is one slot, the DL slot E' after the DL slot E, to determine that the DL slot E' is a DL slot corresponding to the effective moment of the first uplink configuration.

It should be understood that the foregoing uses an example in which the terminal device and the network device determines the effective moment of the first uplink configuration by using the time unit carrying the second information as a reference time unit. This application is not limited thereto. Any equivalent manner of replacing the reference time unit should fall within the protection scope of this application.

Optionally, the reference time unit may alternatively be a time unit (denoted as a fifth time unit) carrying the first information. A time interval between the time unit carrying the first information and the first time unit is a fourth time interval, and the fourth time interval is indicated by the network device. In this case, a time interval between the effective moment of the first uplink configuration and the time unit carrying the first information is a sum of the fourth time interval and the first time interval.

For example, as shown in FIG. 9, the gNB sends, to the UE on the PDSCH in the DL slot Y (where the DL slot Y is an example of the fifth time unit), the MAC CE for activating the first uplink configuration, and the UE receives the MAC CE on the PDSCH in the DL slot Y of the UE. The UE may determine the effective moment of the first uplink configuration based on a UL slot Y, $K_{\text{PDSCH-HARQ}}$ (that is, the fourth time interval), and the first time interval. A time interval between the effective moment (that is, a UL slot E") of the first uplink configuration and the UL slot Y is a sum of $K_{\text{PDSCH-HARQ}}$ and the first time interval. For example, calculation may be performed with reference to the following formula:

$$E''_{\text{UE,UL}} = Y_{\text{UE,UL}} + K_{\text{PDSCH-HARQ}} + K_{\text{int1}} \, .$$

Correspondingly, the network device may determine, based on the time sequence relationship between the PDSCH and feedback information and based on the UL slot Y, $K_{PDSCH-HARQ}$, and the second time interval, that the start moment of the UL slot E is the effective moment of the uplink configuration. For example, calculation may be performed with reference to the following formula:

$$E_{gNB,UL} = Y_{gNB,UL} + K_{PDSCH-HARQ} + K_{int2} \ .$$

It should be noted that, in this embodiment of this application, an example in which a time interval between two time units is a time interval between start moments of the two time units is used for description. Alternatively, when a time interval between two time units is represented by time unit identifiers, it may be understood that the time interval between the two time units is a difference between the time unit identifiers of the two time units. In the example shown in FIG. 9, the second time interval between the gNB UL slot N and the UL slot E is four slots. FIG. 9 shows a time interval between a start moment of the UL slot N and the start moment of the UL slot E, that is, E=N+4. However, this application is not limited thereto, and a manner of representing a time interval is not limited in this application. It should be understood that equivalent replacements of manners of representing different time intervals should fall within the protection scope of this application. For example, a time interval between two time units may be represented by a time length or a quantity of time units between an end moment of a previous time unit and a start moment of a next time unit. In this case, the second time interval between the gNB UL slot N and the UL slot E in the example in FIG. 9 may be replaced with three slots, that is, $K_{int2} = 3$ . Alternatively, when an SCS is 15 kHz, the second time interval may be a time length of 3 ms. If the second time interval represents a time interval in this manner, the slot identifier E is obtained through calculation by using $E=N+K_{int2}+1$ , and $E_{gNB,UL}$ above may be calculated with reference to the following formula:

$$E_{gNB,UL} = N_{gNB,UL} + K_{int2} + 1 = Y_{gNB,UL} + K_{PDSCH-HARQ} + K_{int2} + 1 \ .$$

If the first time interval also represents a time interval in this manner, $E''_{UE,UL}$ above may be calculated with reference to the following formula:

$$E''_{UE,UL} = N_{UE,UL} + K_{int1} + 1 = Y_{UE,UL} + K_{PDSCH-HARQ} + K_{int1} + 1 \ .$$

After the 2nd equal sign in the foregoing two formulas, $K_{int1}$ and $K_{int2}$ each are represented by a quantity of slots between an end moment of a previous time unit and a start moment of a next time unit, and $K_{PDSCH-HARQ}$ is represented by a quantity of slots between start moments of time units in which the PDSCH and the HARQ are respectively located. In another manner, $K_{PDSCH-HARQ}$ may alternatively be represented by a quantity of time units between an end moment of a time unit in which the PDSCH is located and a start moment of a time unit in which the HARQ is located. $E_{gNB,UL}$ above may be calculated with reference to the following formula:

$$E_{gNB,UL} = N_{gNB,UL} + K_{int2} + 1 = Y_{gNB,UL} + K_{PDSCH-HARQ} + K_{int2} + 2 \ .$$

$E''_{UE,UL}$ above may be calculated with reference to the following formula:

$$E''_{UE,UL} = N_{UE,UL} + K_{int1} + 1 = Y_{UE,UL} + K_{PDSCH-HARQ} + K_{int1} + 2 \ .$$

For another time interval in this application, refer to the foregoing representation manners. For brevity, examples are not provided herein one by one.

The foregoing describes manners in which the terminal device and the network device determine the effective moment of the first uplink configuration. If the terminal device receives third information from the network device before the effective moment of the first uplink configuration, the third information is for scheduling the terminal device to send uplink information. The terminal device sends the uplink information based on a second uplink configuration, where the second uplink configuration is an uplink configuration that has taken effect before the first uplink configuration takes effect. If the terminal device receives scheduling information from the network device after a first uplink effective moment, the terminal device sends the uplink information in response to the scheduling information based on the first uplink configuration. In this way, the terminal device and the network device can have consistent understandings of an uplink configuration used in one time of scheduling, so that a probability of a scheduling failure caused by inconsistent understandings between two communication parties can be reduced, and reliability of communication can be improved.

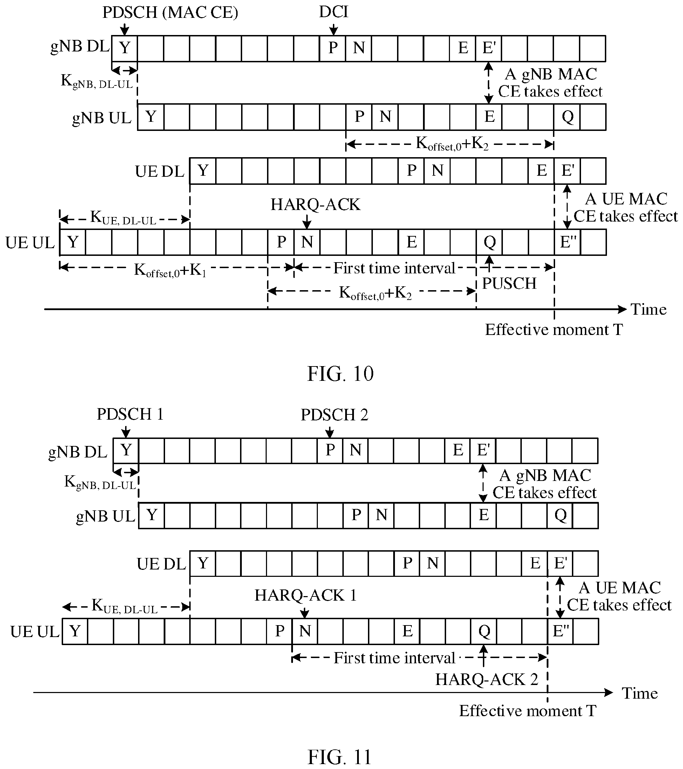

For example, as shown in FIG. 10, a gNB sends a MAC CE to UE on a PDSCH in a DL slot Y of the gNB, where the MAC CE activates a first uplink configuration. The UE receives the MAC CE in a DL slot Y of the UE, determines that the first uplink configuration is activated, and determines to send a HARQ-ACK to the gNB in a UL slot N of the UE, and the UE determines, based on a first time interval and the UL slot N, that an effective moment T of the first uplink configuration is separated from the UL slot N by the first time interval, that is, the effective moment is a start moment of a UL slot E". The UE sends the uplink information by using a second uplink configuration before the first uplink configuration.

In an example, the MAC CE is for updating $K_{offset,1}$, and $K_{offset,1}$ is for updating a time interval $K_{offset}$ for sending scheduling response information by the UE. As described above, the UE may determine that an effective moment of $K_{offset,1}$ is the start moment of the UL slot E". In this case, the UE uses the second uplink configuration before the effective moment of the first uplink configuration, that is, $K_{offset,0}$ that has taken effect before $K_{offset,1}$ takes effect. For example, the UE determines, based on $K_{offset,0}$ that has taken effect and $K_1$ indicated by DCI for scheduling the MAC CE, that a time interval between the slot N for sending the HARQ-ACK and the slot Y is $K_{offset,0}+K_1$. If the gNB sends DCI to the UE in a DL slot P, the DCI is for scheduling the UE to send uplink information (for example, uplink data). After receiving the DCI in a DL slot P of the UE, the UE determines that absolute time of the DL slot P is before the effective moment of $K_{offset,1}$, in other words, $K_{offset,1}$ does not take effect. Then, the UE determines, based on $K_{offset,0}$ and an offset $K_2$ indicated by the DCI received in the DL slot P, that a time interval between a UL slot P and the uplink information sent in response to the DCI is $K_{offset,0}+K_2$. In this case, the UE determines to send the uplink information on a PUSCH in a UL slot Q of the UE. For example, calculation may be performed with reference to the following formula:

$$Q_{UE,UL}=P_{UE,UL}+K_{offset,0}+K_2 .$$

Correspondingly, the gNB sends the DCI in the DL slot P. Because the HARQ-ACK of the MAC CE for updating $K_{offset,1}$ is not received from the UE in this case, the gNB considers that $K_{offset,1}$ does not take effect, and determines, based on $K_{offset,0}$ and the offset $K_2$, that a time interval between the UL slot Q for sending the uplink information by the UE and the UL slot P is $K_{offset,0}+K_2$. In this case, the gNB receives the uplink information from the UE in a UL slot Q of the gNB. For example, calculation may be performed with reference to the following formula:

$$Q_{gNB,UL}=P_{gNB,UL}+K_{offset,0}+K_2 .$$

As described above, in the manner of determining the effective moment of the uplink configuration provided in this application, the gNB and the UE can reach a consensus on the used time interval $K_{offset}$ for determining that the UE sends the scheduling response information, so that a probability of determining, by using different time intervals $K_{offset}$, a moment for sending the scheduling response information is reduced, and reliability of communication is improved.

In another example, the MAC CE is for activating a DRX configuration, to be specific, a network device indicates, by using the MAC CE, a terminal device to enter a sleep state. As shown in FIG. 10, after receiving the MAC CE in the DL slot Y, the UE determines that the DRX configuration is to be activated. In addition, the UE may determine, based on the UL slot N carrying a HARQ feedback and the first time interval, that an interval between an effective moment of the DRX configuration and the UL slot N is the first time interval. In other words, the UE determines that the effective moment of the DRX configuration is the start moment of the UL slot E" of the UE. Because the gNB does not receive, in the UL slot P, the HARQ-ACK of the MAC CE for activating the DRX configuration from the UE, the gNB considers that the DRX configuration of the UE does not take effect, and the gNB may send DCI for scheduling uplink information to the UE in the DL slot P. The UE receives the DCI in the DL slot P of the UE, where absolute time of the DL slot P is before the effective moment of the DRX configuration. The UE does not enter a sleep state, and is still monitoring a PDCCH. After receiving the DCI, the UE needs to respond to the DCI. The UE determines the UL slot Q based on currently effective $K_{offset,0}$ and the offset $K_2$ indicated by the DCI. The UE sends the uplink information to the gNB on the PUSCH in the UL slot Q. Correspondingly, the gNB determines, based on currently effective $K_{offset,0}$ and the offset $K_2$, the UL slot Q in which the UE sends the uplink information, and receives the uplink information from the UE in the UL slot Q of the gNB. However, the gNB determines that the effective moment of the DRX configuration is a start moment of a UL slot E. Because the UE enters the sleep state after the DRX configuration takes effect, the gNB does not send scheduling information to the UE after the effective moment of the DRX configuration. The UE enters the sleep state at the effective moment of the DRX configuration (that is, the start moment of the UL slot E" of the UE or a start moment of a DL slot E' of the UE) and does not receive the scheduling information. As described above, in the manner of determining the effective moment of the uplink configuration provided in this application, the gNB and the UE determine the effective moment of the DRX configuration, so that the gNB and the UE can reach a consensus on time at which the UE can respond to scheduling, so that a probability of a resource waste caused because the UE cannot respond to the scheduling of the gNB is reduced, and reliability of communication is improved.

In still another example, as shown in FIG. 11, a gNB sends a MAC CE to UE on a PDSCH 1 in a DL slot Y of the gNB. The MAC CE is a MAC CE for activating a PUCCH spatial relationship, and is for activating a beam configuration 1 corresponding to a PUCCH (where for example, a transmit beam direction is configured for the beam configuration 1). The UE receives the MAC CE in a DL slot Y of the UE, determines that the beam configuration 1 corresponding to the PUCCH is to be activated, and determines that a HARQ-ACK 1 of the MAC CE is to be sent to the gNB on a PUCCH in a UL slot N of the UE. In addition, the UE determines, based on a first time interval and the UL slot N, that an effective moment T of the beam configuration 1 corresponding to the PUCCH is separated from the UL slot N by the first time interval. In other words, the effective moment of the beam configuration 1 is a start moment of a UL slot E" of the UE. The UE sends uplink control information (such as HARQ feedback information) by using a beam 0 before the effective moment of the beam configuration 1 corresponding to the PUCCH. If the beam 1 does not take effect in the UL slot N of the UE, the UE sends feedback information of the MAC CE, that is, the HARQ-ACK 1, to the gNB on the PUCCH by using a currently effective beam configuration 0. In addition, the gNB may send a PDSCH 2 to the UE in a DL slot P. The UE receives the PDSCH 2 in a DL slot P of the UE. Because absolute time of the DL slot P is before the effective moment of the beam configuration 1, the UE sends feedback information, that is, a HARQ-ACK 2 of the PDSCH 2 by using the beam configuration 0. As shown in FIG. 11, the UE sends the HARQ-ACK 2 in a UL slot Q by using the beam configuration 0. Correspondingly, the gNB sends the PDSCH 2 in the DL slot P. Because the HARQ-ACK 1 of the MAC CE for activating the PUCCH spatial relationship is not received from the UE in this case, the gNB considers that the beam configuration 1 corresponding to the PUCCH does not take effect, the UE sends the HARQ-ACK 2 by using the beam configuration 0, and the gNB correspondingly receives the HARQ-ACK 2 from the UE by using the beam configuration 0. The gNB sends a PDSCH in a DL slot after the effective moment of the beam configuration 1 corresponding to the PUCCH. The UE receives the PDSCH after the effective moment of the beam configuration 1 corresponding to the PUCCH. The UE sends HARQ feedback information of the PDSCH by using the beam configuration 1. Correspondingly, the gNB receives the HARQ feedback information from the UE by using the beam configuration 1. In this way, the gNB and the UE can reach a consensus on a beam configuration pair corresponding to the PUCCH, so that a probability of sending and receiving uplink information by using a non-corresponding beam configuration is reduced, and reliability of communication is improved.

Optionally, the terminal device and the network device may determine a third time interval before effective moments of respective first uplink configurations. The third time interval is greater than or equal to the sum of the first time offset and the second time offset. The third time interval before the effective moment of the first uplink configuration may be referred to as a transition period for an uplink configuration to take effect or a fuzzy period of the uplink configuration. However, this application is not limited thereto.

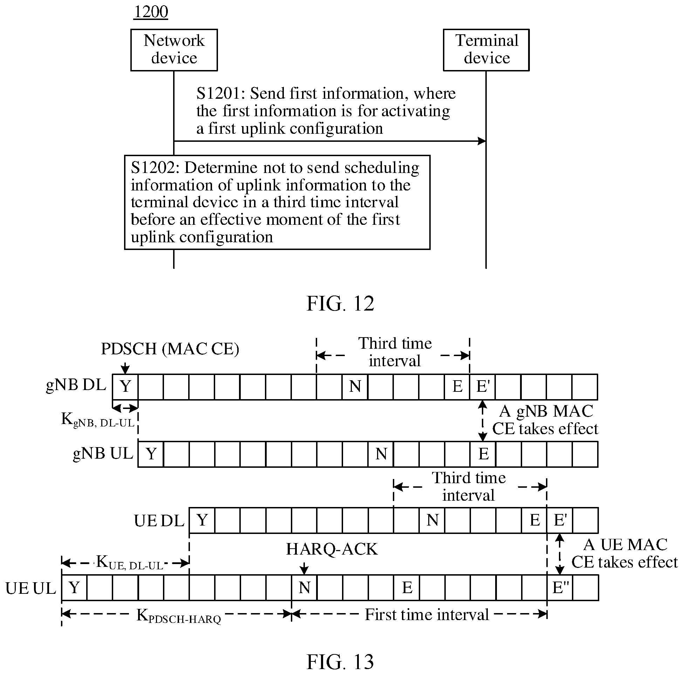

For example, as shown in FIG. 13, the third time interval is equal to the sum of the first time offset and the second time offset. For example, a transition period on a side of a gNB and a side of UE specifically refers to DL slots whose slot identifiers are $N-K_{gNB,DL-UL}$ to $N+K_{UE,DL-UL}$, and are denoted as DL slots $[N-K_{gNB,DL-UL}, N+K_{UE,DL-UL}]$, where $N=Y+K_{PDSCH-HARQ}$. In this case, the transition period on the side of the gNB and the side of the UE may alternatively be represented as DL slots $[Y+K_{PDSCH-HARQ}-K_{gNB,DL-UL}, Y+K_{PDSCH-HARQ}+K_{UE,DL-UL}]$. An example in which a time interval between two time units is a time interval between start moments of the two time units is used for description above. Alternatively, when a time interval between two time units is represented by a time unit identifier, it may be understood that the time interval between the two time units is a difference between time unit identifiers of the two time units. However, this application is not limited thereto, and a manner of representing a time interval is not limited in this application. It should be understood that equivalent replacements of manners of representing different time intervals should fall within the protection scope of this application.

For the foregoing problem that the terminal device and the network device have inconsistent understandings of effective time of an activated uplink configuration, this application provides a definition of an effective moment of the activated uplink configuration on a side of the terminal device. In the embodiment shown in FIG. 8, it is proposed that uplink transmission is performed, before the effective moments of the first uplink configurations respectively determined by the terminal device and the network device, by using the second uplink configuration that has taken effect before the first uplink configuration takes effect, and uplink transmission is performed by using the first uplink configuration after the effective moment of the first uplink configuration. The terminal device and the network device have consistent understandings of a used uplink configuration, so that a probability of a scheduling failure is reduced, and reliability of communication is improved. This application further provides another embodiment shown in FIG. 12. Because a terminal device and a network device may not agree on a used uplink configuration in a period of time before an effective moment of a first uplink configuration, for example, the terminal device uses the first uplink configuration that has taken effect, the network device considers that the first uplink configuration does not take effect, and uses a second uplink configuration to receive uplink transmission. As a result, uplink information cannot be correctly received. Therefore, in the embodiment shown in FIG. 12, it may be specified that the network device does not send scheduling information of the uplink information in a time period in which the network device and the terminal device may have inconsistent understandings of the used uplink configuration, to reduce a probability of a scheduling failure and improve reliability of communication.

FIG. 12 is a schematic flowchart of a communication method 1200 according to an embodiment of this application. FIG. 12 is shown by using a network device and a terminal device. The network device and/or the terminal device may alternatively be replaced with chips/a chip, modules/a module, or the like configured to perform the method. This application is not limited thereto. It should be noted that, for a part that is in the embodiment shown in FIG. 12 and that is the same as that in the embodiment shown in FIG. 8, refer to the foregoing descriptions of the embodiment shown in FIG. 8. For brevity, details are not described herein again.

S1201: The network device sends first information to the terminal device, where the first information is for activating a first uplink configuration.

Correspondingly, the terminal device receives the first information from the network device. The terminal device determines, based on the first information, that the first uplink configuration is activated.

S1202: The network device determines not to send scheduling information of uplink information to the terminal device in a third time interval before an effective moment of the first uplink configuration.

The third time interval is greater than or equal to a sum of a first time offset and a second time offset. The third time interval before the effective moment of the first uplink configuration may be referred to as a transition period for an uplink configuration to take effect or a fuzzy period of the uplink configuration. However, this application is not limited thereto.

The network device may determine, based on a time sequence relationship between the first information and feedback information, a UL slot carrying the feedback information of the first information sent by the terminal device, and then determine, based on a second time interval, the effective moment of the first uplink configuration if the terminal device receives the first information. As shown in FIG. 13, the network device sends, in a DL slot Y, a MAC CE for activating the first uplink configuration, and the network device may determine, based on a UL slot Y, $K_{PDSCH-HARQ}$ (that is, a fourth time interval), and a first time interval, the effective moment of the first uplink configuration, that is, a start moment of a UL slot E, when the terminal device receives the first information. Before the effective moment of the first uplink configuration, the network device and the terminal device may have inconsistent understandings of a used uplink configuration. For example, when the terminal device successfully receives the first information, the terminal device performs uplink transmission by using the first uplink configuration, and the network device performs uplink reception by using a second uplink configuration. As a result, the uplink information cannot be correctly received. Therefore, this application proposes that the network device does not send the scheduling information of the uplink information to the terminal device in the third time interval before the effective moment of the first uplink configuration.

For example, as shown in FIG. 13, an example in which the third time interval is the sum of the first time offset and the second time offset is used for description. The first time offset $K_{gNB,DL-UL}$ is one slot, and the second time offset $K_{UE,DL-UL}$ is five slots. The gNB may determine that the third time interval is $K_{gNB,DL-UL}+K_{gNB,DL-UL}$, that is, six slots. The gNB sends, in the DL slot Y of the gNB, the MAC CE for activating the first uplink configuration, and determines, based on a HARQ-ACK that is of the MAC CE and that is carried in a UL slot N and the first time interval, the effective moment that is of the first uplink configuration and that is separated from the UL slot N by the first time interval, that is, the start moment of the UL slot E or a start moment of a DL slot E' of the gNB. The gNB determines, on the basis that the third time interval is six slots, that six slots before the effective moment of the first uplink configuration are a transition period for the uplink configuration to take effect. The gNB does not send uplink scheduling information to the UE in the transition period. Because the UE does not receive the uplink scheduling information, the UE does not send the uplink information either. If the gNB sends uplink scheduling DCI to the UE before the transition period, the gNB receives, by using the second uplink configuration, the uplink information sent by the UE in response to the DCI. In addition, if the gNB sends the uplink scheduling DCI to the UE after the transition period, the gNB receives, by using the first uplink configuration that has taken effect, the uplink information sent by the UE to the gNB in response to the DCI. A probability of a scheduling failure caused by inconsistent understandings between the gNB and the UE can be reduced.

Optionally, the terminal device receives fourth information in the third time interval before the effective moment of the first uplink configuration, where the fourth information is for scheduling the terminal device to send uplink information. The terminal device determines, based on the fourth information received in the third time interval, not to respond to the fourth information.

After receiving the first information, the terminal device may determine the effective moment of the first uplink configuration (where for a specific determining manner, refer to descriptions in the example shown in FIG. 8, and for brevity, details are not described herein again). The network device does not send the scheduling information of the uplink information to the terminal device in the third time interval before the effective moment of the first uplink configuration determined by the network device. Correspondingly, the terminal device does not expect to receive the scheduling information of the uplink information in the third time interval before the effective moment of the first uplink configuration. If the terminal device receives the scheduling information of the uplink information in the third time interval before the effective moment of the first uplink configuration, the terminal device considers that the scheduling information is incorrect, and the terminal device does not respond to the scheduling information.

In an example, the third time interval is the sum of the first time offset and the second time offset. The network device may configure the first time offset and the second time offset for the terminal device, and the terminal device determines the third time interval based on the first time offset and the second time offset, so that the terminal device and the network device reach a consensus on the third time interval.

In another example, the network device may configure the third time interval for the terminal device, so that the terminal device and the network device reach a consensus on the third time interval. The third time interval is greater than or equal to the sum of the first time offset and the second time offset.

For example, as shown in FIG. 13, the third time interval is the sum of the first time offset and the second time offset. The first time offset $K_{gNB,DL-UL}$ is one slot, and the second time offset $K_{UE,DL-UL}$ is five slots. The UE may determine that the third time interval is $K_{gNB,DL-UL}+K_{gNB,DL-UL}$, that is, six slots. The UE receives, in the DL slot Y of the UE, the MAC CE for activating the first uplink configuration from the gNB, and determines, based on the HARQ-ACK that is of the MAC CE and that is carried in the UL slot N of the UE and the first time interval, the effective moment that is of the first uplink configuration and that is separated from the UL slot N by the first time interval, that is, a start moment of the UL slot E" or the DL slot E' of the UE. The UE determines, on the basis that the third time interval is six slots, that the six slots before the effective moment of the first uplink configuration are the transition period for the uplink configuration to take effect. If the UE receives the DCI in a DL slot X of the UE, where the DCI is the scheduling information of the uplink information, because the slot X belongs to the third time interval before the effective moment of the first uplink configuration, the UE considers that the DCI is incorrect, and does not respond to the DCI. In other words, the UE does not send the uplink information scheduled by using the DCI. If the UE receives the uplink scheduling DCI before the transition period, the UE sends the uplink information to the gNB in response to the DCI by using the second uplink configuration. In addition, if the UE receives the uplink scheduling DCI after the transition period, the UE sends the uplink information to the gNB in response to the DCI by using the first uplink configuration that has taken effect.

Based on the foregoing solution of this application, the terminal device can determine the effective moment of the activated uplink configuration, so that a probability of a scheduling failure caused by inconsistent uplink configurations used by the terminal device and the network device can be reduced, and reliability of communication can be improved.

The foregoing describes in detail the method provided in this application. The following accompanying drawings describe a communication apparatus and a communication device provided in this application. To implement functions in the method provided in this application, each network element may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

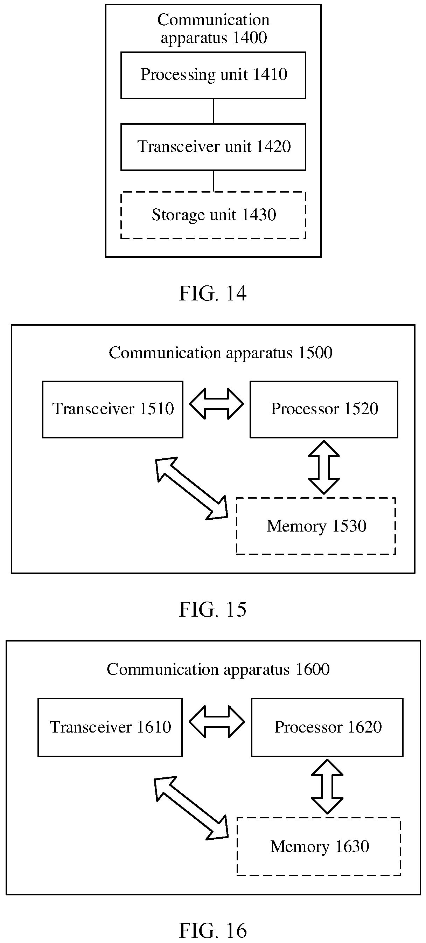

FIG. 14 is a schematic block diagram of a communication apparatus according to this application. As shown in FIG. 14, a communication apparatus 1400 may include a transceiver unit 1420.

In a possible design, the communication apparatus 1400 may correspond to the terminal device in the foregoing method, or may be a chip disposed in (or used in) the terminal device, or may be another apparatus, module, circuit, unit, or the like that can implement a method performed by the terminal device.

It should be understood that the communication apparatus 1400 may include units configured to perform the method performed by the terminal device in the method shown in FIG. 8 and/or FIG. 12. In addition, the units in the communication apparatus 1400 and the foregoing other operations and/or functions are separately intended to implement corresponding procedures of the method shown in FIG. 8 and/or FIG. 12.

Optionally, the communication apparatus 1400 may further include a processing unit 1410. The processing unit 1410 may be configured to process instructions or data, to implement a corresponding operation.

It should be further understood that, when the communication apparatus 1400 is the chip disposed in (or used in) the terminal device, the transceiver unit 1420 in the communication apparatus 1400 may be an input/output interface or circuit in the chip, and the processing unit 1410 in the communication apparatus 1400 may be a processor in the chip.

Optionally, the communication apparatus 1400 may further include a storage unit 1430. The storage unit 1430 may be configured to store instructions or data. The processing unit 1410 may execute the instructions or the data stored in the storage unit, to enable the communication apparatus to implement a corresponding operation.

It should be understood that the transceiver unit 1420 in the communication apparatus 1400 may be implemented by using a communication interface (for example, a transceiver, a transceiver circuit, an input/output interface, or a pin), for example, the transceiver unit may correspond to a transceiver 1510 in a communication apparatus 1500 shown in FIG. 15. The processing unit 1410 in the communication apparatus 1400 may be implemented by using at least one processor, for example, the processing unit may correspond to a processor 1520 in the communication apparatus 1500 shown in FIG. 15. The processing unit 1410 in the communication apparatus 1400 may alternatively be implemented by using at least one logic circuit. The storage unit 1430 in the communication apparatus 1400 may correspond to a memory 1530 in a terminal device 1500 shown in FIG. 15.

It should be further understood that a specific process in which the units perform the foregoing corresponding steps is described in detail in the foregoing method. For brevity, details are not described herein again.

In another possible design, the communication apparatus 1400 may correspond to the network device in the foregoing method, or may be a chip disposed in (or used in) the network device, or may be another apparatus, module, circuit, unit, or the like that can implement a method performed by the network device.

It should be understood that the communication apparatus 1400 may include units configured to perform the method performed by the network device in the method shown in FIG. 8 and/or FIG. 12. In addition, the units in the communication apparatus 1400 and the foregoing other operations and/or functions are separately intended to implement corresponding procedures of the method shown in FIG. 8 and/or FIG. 12.

Optionally, the communication apparatus 1400 may further include a processing unit 1410. The processing unit 1410 may be configured to process instructions or data, to implement a corresponding operation.

It should be further understood that, when the communication apparatus 1400 is the chip disposed in (or used in) the network device, the transceiver unit 1420 in the communication apparatus 1400 may be an input/output interface or circuit in the chip, and the processing unit 1410 in the communication apparatus 1400 may be a processor in the chip.

Optionally, the communication apparatus 1400 may further include a storage unit 1430. The storage unit 1430 may be configured to store instructions or data. The processing unit 1410 may execute the instructions or the data stored in the storage unit, to enable the communication apparatus to implement a corresponding operation.

It should be understood that, when the communication apparatus 1400 is a network device, the transceiver unit 1420 in the communication apparatus 1400 may be implemented by using a communication interface (for example, a transceiver, a transceiver circuit, an input/output interface, or a pin), for example, the transceiver unit may correspond to a transceiver 1610 in a communication apparatus 1600 shown in FIG. 16. The processing unit 1410 in the communication apparatus 1400 may be implemented by using at least one processor, for example, the processing unit may correspond to a processor 1620 in the communication apparatus 1600 shown in FIG. 16. The processing unit 1410 in the communication apparatus 1400 may be implemented by using at least one logic circuit. The storage unit 1430 in the communication apparatus 1400 may correspond to a memory 1630 in the communication apparatus 1600 shown in FIG. 16.

It should be further understood that a specific process in which the units perform the foregoing corresponding steps is described in detail in the foregoing method. For brevity, details are not described herein again.

FIG. 15 is a diagram of a structure of a communication apparatus 1500 according to this application. The communication apparatus 1500 may be applied to the system shown in FIG. 1, to perform functions of the terminal device in the foregoing method. The communication apparatus 1500 may be a terminal device, or the communication apparatus 1500 may be configured in a terminal device.

As shown in FIG. 15, the communication apparatus 1500 includes the processor 1520 and the transceiver 1510. Optionally, the communication apparatus 1500 further includes the memory 1530. The processor 1520, the transceiver 1510, and the memory 1530 may communicate with each other through an internal connection path, to transmit a control signal and/or a data signal. The memory 1530 is configured to store a computer program, and the processor 1520 is configured to execute the computer program in the memory 1530, to control the transceiver 1510 to receive and send a signal.

The processor 1520 may be configured to perform an action that is implemented inside the terminal device and that is described in the foregoing method. The transceiver 1510 may be configured to perform a sending or receiving action that is performed by the terminal device and that is described in the foregoing method. For details, refer to descriptions in the foregoing method. Details are not described herein again.

Optionally, the communication apparatus 1500 may further include a power supply, configured to supply power to various components or circuits in the communication apparatus.

FIG. 16 is a diagram of a structure of a communication apparatus 1600 according to this application. The communication apparatus 1600 may be applied to the system shown in FIG. 1, to perform the functions of the network device in the foregoing method. The communication apparatus 1500 may be a network device, or the communication apparatus 1500 may be configured in a network device.

As shown in FIG. 16, the communication apparatus 1600 includes the processor 1620 and the transceiver 1610. Optionally, the communication apparatus 1600 further includes the memory 1630. The processor 1620, the transceiver 1610, and the memory may communicate with each other through an internal connection path, to transmit a control and/or data signal. The memory 1630 is configured to store a computer program, and the processor 1620 is configured to execute the computer program in the memory 1630, to control the transceiver 1610 to receive and send a signal.

The processor 1620 may be configured to perform an action that is implemented inside the network device and that is described in the foregoing method. The transceiver 1610 may be configured to perform a sending or receiving action that is performed by the network device and that is described in the foregoing method. For details, refer to descriptions in the foregoing method. Details are not described herein again.

Optionally, the communication apparatus 1600 may further include a power supply, configured to supply power to various components or circuits in the communication apparatus.

In the communication apparatuses shown in FIG. 15 and FIG. 16, a processor and a memory may be integrated into one processing apparatus, and the processor is configured to execute program code stored in the memory, to implement the foregoing functions. In a specific implementation, the memory may be integrated into the processor, or independent of the processor. The processor may correspond to the processing unit in FIG. 14. A transceiver may correspond to the transceiver unit in FIG. 14. The transceiver may include a receiver (or referred to as a receiver machine or a receiver circuit) and a transmitter (or referred to as a transmitter machine or a transmitter circuit). The receiver is configured to receive a signal, and the transmitter is configured to transmit a signal.

In this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams in this application. The general purpose processor may be a microprocessor or any conventional processor or the like. The steps of the method with reference to this application may be directly performed and completed by a hardware processor, or may be performed and completed by a combination of hardware and a software module in a processor.

In this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can carry or store expected program code in a form of an instruction or a data structure and that can be accessed by a computer, but is not limited thereto. The memory in this application may alternatively be a circuit or any other apparatus that can implement a storage function, and is configured to store program instructions and/or data.

This application further provides a processing apparatus, including a processor and a (communication) interface. The processor uses the communication interface to perform the method in embodiments shown in FIG. 8 and/or FIG. 12.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

According to the method provided in this application, this application further provides a computer program product. The computer program product includes computer program code. When the computer program code is executed by one or more processors, an apparatus including the processor is enabled to perform the method in embodiments shown in FIG. 8 and/or FIG. 12.

All or some of the technical solutions provided in this application may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions in this application are generated. The computer instructions may be stored in a computer-readable storage medium, or may be transmitted from one computer-readable storage medium to another computer-readable storage medium. The computer-readable storage medium may be any usable medium that can be read by a computer, or a data storage device that includes one or more usable medium integrated servers, data centers, or the like. The usable medium may be a magnetic medium (for example, a floppy disk, a hard disk drive, or a magnetic tape), an optical medium (for example, a digital video disc (digital video disc, DVD)), a semiconductor medium, or the like.

According to the method provided in this application, this application further provides a computer-readable storage medium. The computer-readable storage medium stores program code. When the program code is run by one or more processors, an apparatus including the processor is enabled to perform the method in embodiments shown in FIG. 8 and/or FIG. 12.

According to the method provided in this application, this application further provides a system, including the foregoing one or more terminal devices. The system may further include the foregoing one or more network devices.

In several embodiments provided in this application, it should be understood that the disclosed system, apparatus, and method may be implemented in another manner. For example, the described apparatus is merely an example. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving first information from a network device, wherein the first information is for activating a first uplink configuration;

   sending second information to the network device in a first time unit, wherein the second information is for confirming that the first information is received; and

   determining an effective moment of the first uplink configuration, wherein a time interval between the effective moment and the first time unit is a first time interval, wherein

   the first time interval is greater than a sum of a first time offset and a second time offset, the first time offset is a time offset between an uplink time unit and a downlink time unit that are of the network device and that correspond to a same time unit identifier, and the second time offset is a time offset between an uplink time unit and a downlink time unit that are of a terminal device and that correspond to a same time unit identifier.

2. The method according to claim 1, wherein the first time interval is greater than or equal to a sum of a second time interval, the first time offset, and the second time offset; and

   the second time interval is a predefined minimum time interval for a configuration to take effect.

3. The method according to claim 2, wherein the determining an effective moment of the first uplink configuration comprises:

   determining a second time unit based on the first time unit and the second time interval, wherein a time interval between the second time unit and the first time unit is the second time interval;

   determining a third time unit based on a first identifier of an uplink time unit of the second time unit, wherein the third time unit is a downlink time unit corresponding to the first identifier; and

   determining a fourth time unit based on the third time unit and the first time offset, wherein a time interval between the fourth time unit and the third time unit is the first time offset, and the effective moment is a start moment of the fourth time unit.

4. The method according to any one of claims 1 to 3, wherein the method further comprises:

   receiving third information from the network device before the effective moment, wherein the third information is for scheduling the terminal device to send uplink information; and

   sending the uplink information based on a second uplink configuration, wherein the second uplink configuration is an uplink configuration that has taken effect before the first uplink configuration takes effect.

5. The method according to any one of claims 1 to 3, wherein the method further comprises:

   receiving fourth information in a third time interval before the effective moment, wherein the fourth information is for scheduling the terminal device to send uplink information, and the third time interval is greater than or equal to the sum of the first time offset and the second time offset; and

   determining, on the basis that the fourth information is received in the third time interval, not to respond to the fourth information.

6. The method according to any one of claims 1 to 5, wherein the receiving first information from a network device comprises:
   receiving the first information from the network device in a fifth time unit, wherein a time interval between the fifth time unit and the first time unit is a fourth time interval, the fourth time interval is indicated by the network device, and a time interval between the effective moment and the fifth time unit is a sum of the fourth time interval and the first time interval.

7. A communication method, comprising:

   sending first information to a terminal device, wherein the first information is for activating a first uplink configuration; and

   determining not to send scheduling information of uplink information to the terminal device in a third time interval before an effective moment of the first uplink configuration, wherein the third time interval is greater than or equal to a sum of a first time offset and a second time offset, the first time offset is a time offset between an uplink time unit and a downlink time unit that are of a network device and that correspond to a same time unit identifier, and the second time offset is an offset between an uplink time unit and a downlink time unit that are of the terminal device and that correspond to a same time unit identifier.

8. The method according to claim 7, wherein the method further comprises:

receiving second information from the terminal device in a seventh time unit, wherein the second information is for confirming that the first information is received; and
determining, based on the seventh time unit and a second time interval, an eighth time unit that is separated from the seventh time unit by the second time interval, wherein a start moment of the eighth time unit is the effective moment.

9. The method according to claim 8, wherein the method further comprises:

determining a sixth time unit based on a second identifier of an uplink time unit corresponding to the eighth time unit, wherein the sixth time unit is a downlink time unit corresponding to the second identifier; and
determining, based on the sixth time unit and the first time offset, a ninth time unit that is separated from the sixth time unit by the first time offset, wherein the ninth time unit is a downlink time unit corresponding to the effective moment.

10. A communication apparatus, comprising:

a transceiver unit, configured to receive first information from a network device, wherein the first information is for activating a first uplink configuration, wherein
the transceiver unit is further configured to send second information to the network device in a first time unit, wherein the second information is for confirming that the first information is received; and
a processing unit, configured to determine an effective moment of the first uplink configuration, wherein a time interval between the effective moment and the first time unit is a first time interval, wherein
the first time interval is greater than a sum of a first time offset and a second time offset, the first time offset is a time offset between an uplink time unit and a downlink time unit that are of the network device and that correspond to a same time unit identifier, and the second time offset is a time offset between an uplink time unit and a downlink time unit that are of a terminal device and that correspond to a same time unit identifier.

11. The apparatus according to claim 10, wherein the first time interval is greater than or equal to a sum of a second time interval, the first time offset, and the second time offset; and
the second time interval is a predefined minimum time interval for a configuration to take effect.

12. The apparatus according to claim 11, wherein the processing unit is specifically configured to:

determine a second time unit based on the first time unit and the second time interval, wherein a time interval between the second time unit and the first time unit is the second time interval;
determine a third time unit based on a first identifier of an uplink time unit of the second time unit, wherein the third time unit is a downlink time unit corresponding to the first identifier; and
determine a fourth time unit based on the third time unit and the first time offset, wherein a time interval between the fourth time unit and the third time unit is the first time offset, and the effective moment is a start moment of the fourth time unit.

13. The apparatus according to any one of claims 10 to 12, wherein the transceiver unit is further configured to:

receive third information from the network device before the effective moment, wherein the third information is for scheduling the terminal device to send uplink information; and
send the uplink information based on a second uplink configuration, wherein the second uplink configuration is an uplink configuration that has taken effect before the first uplink configuration takes effect.

14. The apparatus according to any one of claims 10 to 12, wherein

the transceiver unit is further configured to receive fourth information in a third time interval before the effective moment, wherein the fourth information is for scheduling the terminal device to send uplink information, and the third time interval is greater than or equal to the sum of the first time offset and the second time offset; and the processing unit is further configured to determine, on the basis that the fourth information is received in the third time interval, not to respond to the fourth information.

15. A communication apparatus, comprising:

a transceiver unit, configured to send first information to a terminal device, wherein the first information is for activating a first uplink configuration; and
a processing unit, configured to determine not to send scheduling information of uplink information to the terminal device in a third time interval before an effective moment of the first uplink configuration, wherein the third time interval is greater than or equal to a sum of a first time offset and a second time offset, the first time offset is a time offset between an uplink time unit and a downlink time unit that are of a network device and that correspond to a same time unit identifier, and the second time offset is an offset between an uplink time unit and a downlink time unit that are of the terminal device and that correspond to a same time unit identifier.

16. The apparatus according to claim 15, wherein

the transceiver unit is further configured to receive second information from the terminal device in a seventh time unit, wherein the second information is for confirming that the first information is received; and
the processing unit is further configured to determine, based on the seventh time unit and a second time interval, an eighth time unit that is separated from the seventh time unit by the second time interval, wherein a start moment of the eighth time unit is the effective moment.

17. The apparatus according to claim 16, wherein the processing unit is further configured to:

determine a sixth time unit based on a second identifier of an uplink time unit corresponding to the eighth time unit, wherein the sixth time unit is a downlink time unit corresponding to the second identifier; and
determine, based on the sixth time unit and the first time offset, a ninth time unit that is separated from the sixth time unit by the first time offset, wherein the ninth time unit is a downlink time unit corresponding to the effective moment.

18. A communication apparatus, comprising a processor, wherein the processor is coupled to a memory, the memory is configured to store a computer program, and the processor is configured to execute the computer program stored in the memory, to enable the communication apparatus to perform the method according to any one of claims 1 to 6, or enable the communication apparatus to perform the method according to any one of claims 7 to 9.

19. A computer-readable storage medium, storing instructions, wherein when the instructions are run on a computer, the computer is enabled to perform the method according to any one of claims 1 to 6, or the method according to any one of claims 7 to 9.

FIG. 1

FIG. 2

FIG. 2a

FIG. 3

FIG. 4

PDSCH (MAC CE)

gNB DL | Y | | | | | | | N | | | | E | | E' |

$\leftarrow K_{MAC} \rightarrow$  $\leftarrow\;-\;-\; K_{PDSCH\text{-}HARQ}\;-\;-\;-\rightarrow$

The MAC CE takes effect

gNB UL | Y | | | | | | N | | | E |

$\leftarrow$ RTT/2 $\rightarrow$

UE DL | Y | | | | | | N | | | E | E' |

HARQ    A UL MAC CE takes effect

A DL MAC CE takes effect

$\leftarrow\;-\;-$ RTT/2 $\;-\;-\rightarrow$

UE UL | Y | | | | | | | N | | | E | | | | |

$\leftarrow\;-\;-\;-\; K_{PDSCH\text{-}HARQ}\;-\;-\;-\;-\rightarrow$  $\leftarrow\;-\;$ 3 ms $\;-\;\rightarrow$

FIG. 5

FIG. 6

FIG. 7

800

| Network device | | Terminal device |
| --- | --- | --- |

S801: Send first information, where the first information is for activating a first uplink configuration

S802: Send second information in a first time unit, where the second information is for confirming that the first information is received

S803: Determine an effective moment of the first uplink configuration, where an interval between the effective moment and the first time unit is a first time interval, and the first time interval is greater than a sum of a first time offset and a second time offset

FIG. 8

PDSCH (MAC CE)

gNB DL: Y | | | | | | N | | | E | E' | | | |

$K_{gNB, DL-UL}$

A gNB MAC CE takes effect

gNB UL: Y | | | | | | | N | | | E | | | |

Second time interval

UE DL: Y | | | | | | N | | | E | E' | |

$K_{UE, DL-UL}$

HARQ-ACK

A UE MAC CE takes effect

UE UL: Y | | | | | | N | | E | | | | | E" |

$K_{PDSCH-HARQ}$ — First time interval

Time

Effective moment T

FIG. 9

FIG. 10

FIG. 11

1200

Network device → S1201: Send first information, where the first information is for activating a first uplink configuration → Terminal device

S1202: Determine not to send scheduling information of uplink information to the terminal device in a third time interval before an effective moment of the first uplink configuration

FIG. 12

PDSCH (MAC CE)

Third time interval

gNB DL | Y | | | | | | | | | N | | | | E | E' | | | | |

$K_{gNB, DL-UL}$

A gNB MAC CE takes effect

gNB UL | Y | | | | | | | | N | | | E | | | |

Third time interval

UE DL | Y | | | | | | | | | N | | | E | E' | |

HARQ-ACK

A UE MAC CE takes effect

$K_{UE, DL-UL}$

UE UL | Y | | | | | | | N | | | E | | | | E'' | |

$K_{PDSCH-HARQ}$ — First time interval —

FIG. 13

Communication
apparatus 1400

Processing unit 1410

Transceiver unit 1420

Storage unit 1430

FIG. 14

Communication apparatus 1500

Transceiver 1510

Processor 1520

Memory 1530

FIG. 15

Communication apparatus 1600

Transceiver 1610

Processor 1620

Memory 1630

FIG. 16

## INTERNATIONAL SEARCH REPORT

| International application No. |
|---|
| **PCT/CN2023/086840** |

### A. CLASSIFICATION OF SUBJECT MATTER

H04W56/00(2009.01)i

According to International Patent Classification (IPC) or to both national classification and IPC

### B. FIELDS SEARCHED

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, VCN, DWPI, CNKI, 3GPP: 配置, 生效, 时间, 时刻, 间隔, 单元, 上行, 下行, 偏移, 差, 绝对时间, 理解, 一致, 相同, 不同, 激活, MAC CE, configur+, time, timing, interval, offset, effect+, action, difference, DL, UL, same

### C. DOCUMENTS CONSIDERED TO BE RELEVANT

| Category* | Citation of document, with indication, where appropriate, of the relevant passages | Relevant to claim No. |
|---|---|---|
| A | CN 113630859 A (BEIJING BAICELLS TECHNOLOGIES CO. LTD.) 09 November 2021 (2021-11-09)<br>description, paragraphs 0030-0077 and 0090-0158, and figures 5-7 | 1-19 |
| A | CN 113347697 A (HUAWEI TECHNOLOGIES CO., LTD.) 03 September 2021 (2021-09-03)<br>entire document | 1-19 |
| A | WO 2022061717 A1 (BEIJING XIAOMI MOBILE SOFTWARE CO., LTD.) 31 March 2022 (2022-03-31)<br>entire document | 1-19 |
| A | MODERATOR (ERICSSON). "Feature Lead Summary#6 on Timing Relationship Enhancements"<br>*3GPP TSG-RAN WG1 Meeting #106bis-e R1- 2110641*, 19 October 2021 (2021-10-19),<br>entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **13 June 2023** | **19 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/086840**

| Patent document cited in search report | | | Publication date (day/month/year) | Patent family member(s) | | | Publication date (day/month/year) |
|---|---|---|---|---|---|---|---|
| CN | 113630859 | A | 09 November 2021 | None | | | |
| CN | 113347697 | A | 03 September 2021 | WO | 2021164579 | A1 | 26 August 2021 |
| | | | | IN | 202227047291 | A | 28 October 2022 |
| | | | | VN | 91336 | A | 25 November 2022 |
| | | | | EP | 4099602 | A1 | 07 December 2022 |
| | | | | US | 2022408389 | A1 | 22 December 2022 |
| WO | 2022061717 | A1 | 31 March 2022 | CN | 112335200 | A | 05 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210380027